# EUROPÄISCHE PATENTSCHRIFT

(11) **EP 1 988 113 B1**
(45) Veröffentlichungstag und Bekanntmachung des Hinweises auf die Patenterteilung: **14.10.2009**
(21) Anmeldenummer: 08102840.9
(22) Anmeldetag: 20.03.2008
(51) Int. Cl.: C08G 69/26, C08L 77/06, C08K 3/00

(54) **Teilaromatische Polyamidformmassen und deren Verwendungen**
Partially aromatic polyamide moulding masses and their applications
Masses de formage en polyamide partiellement aromatiques et leurs utilisations

(30) Priorität: 03.05.2007 EP 07107474
(43) Veröffentlichungstag der Anmeldung: 05.11.2008
(73) Patentinhaber: EMS-PATENT AG, 7013 Domat/Ems (CH)
(72) Erfinder: Hewel, Manfred, 7013 Domat/Ems (CH)
(74) Vertreter: Bremi, Tobias Hans

(56) Entgegenhaltungen:
- WO-A-20/04015010
- US-A- 3 454 536
- US-A- 4 607 073

## Beschreibung

### TECHNISCHES GEBIET

Die vorliegende Erfindung betrifft Polyamid-Formmassen auf Basis eines Terephthalsäure-Copolyamids sowie Verfahren zu deren Herstellung und Verwendungen davon.

### STAND DER TECHNIK

Bekannte Standardpolyamide wie PA6 und PA66 lassen sich leicht verarbeiten, haben hohe Schmelzpunkte und hohe Wärmeformbeständigkeiten, insbesondere wenn sie mit Glasfasern verstärkt sind oder mineralische Füllstoffe enthalten. Allerdings haben sie typischerweise hohe Wasseraufnahmen von bis zu 10% bei Lagerung in Wasser. Für viele Anwendungen mit hohen Anforderungen an die Dimensionsstabilität auch unter nassen oder feuchten Bedingungen können diese aliphatischen Polyamide nicht eingesetzt werden. Mit der Wasseraufnahme verändern sich nicht nur die Dimensionen, sondern auch die mechanischen Eigenschaften. Die Steifigkeiten und die Festigkeiten werden durch die Wasseraufnahme um ein Mehrfaches reduziert. Bei Anwendungen mit mechanischer Belastung in Kontakt mit Wasser oder Umgebungsfeuchte ist der Einsatz der Standardpolyamide in solchen Anwendungen mit anderen Worten problematisch.

Langkettige aliphatische Polyamide aus Aminoundecansäure (PA11) oder Laurinlactam (PA12) oder aus Dodecandiamin und Dodecandisäure (PA1212) haben zwar eine niedrige Wasseraufnahme aber unerwünscht tiefe Schmelzpunkte unter 200°C. Modul und Festigkeit von PA11, PA12 und PA1212 sind bereits in trockenem Zustand tief. Sie sind für technische Anwendungen bei höheren Temperaturen nicht geeignet.

Teilaromatische Polyamide des Typs PA6T/6I, wie sie in der US 4,607,073 beschrieben sind, haben eine reduzierte Wasseraufnahme verglichen mit PA6 und PA66 und die mechanischen Eigenschaften bleiben nach Wasseraufnahme weitgehend erhalten. Die Wasseraufnahme ist aber für Präzisionsteile immer noch zu hoch (Quellung), die Schmelzpunkte sind ebenfalls zu hoch und durch Verwendung der Isophthalsäure werden die Kristallinität sowie die Kristallisationsgeschwindigkeit stark abgesenkt, und die Verarbeitbarkeit ist problematisch.

PA10T auf der anderen Seite, wie es ebenfalls in der US 4,607,073 offenbart wird, hat eine stark reduzierte Wasseraufnahme, die mechanischen Eigenschaften ändern sich nicht bei Lagerung in Wasser. Das Material ist hoch-kristallin und kristallisiert sehr schnell, so dass es beim Spritzguss zum Einfrieren der Düse kommt. Die Oberflächen von glasfaserverstärktem PA10T sind stark gestört.

Teilaromatische Polyamide des Typs PA6T/NDT/INDT wie in der US 4,617,342 beschrieben, oder des Typs PA6T/6I/66 wie in der USRE34447E beschrieben, des Typs PA6T/6/66 gemäss der EP 0 299 444, des Typs PA6T/MPMDT nach der EP 0 522 027 und der EP 0 561 886, haben eine reduzierte Wasseraufnahme im Vergleich zu PA6 und PA66 und die mechanischen Eigenschaften bleiben nach Wasseraufnahme erhalten. Die Wasseraufnahme ist aber auch hier immer noch für Präzisionsteile zu hoch (Quellung). Gemäss US 5,098,940 haben die Polyphthalamide nach der genannten US RE34447E und der ebenfalls oben genannten US 4,617,342 zudem lange Zykluszeiten im Spritzguss und erfordern hohe Formtemperaturen, die mit wasserbeheizten Formen nicht erreicht werden können.

In den Schriften EP 0 659 799, EP 0 976 774, EP 1 186 634 und EP 1 375 578 werden teilaromatische Polyamide aus 60 bis 100 Mol-% Terephthalsäure und 60 bis 100 Mol-% einer Diaminkomponente aus 1,9-Nonandiamin und 2-Methyl-1,8-octandiamin beschrieben. Diese Produkte zeichnen sich durch eine gute Verarbeitbarkeit, exzellente Kristallinität, gute Wärmeformbeständigkeit, niedrige Wasseraufnahme, gute chemischer Beständigkeit, Dimensionsstabilität und Zähigkeit aus. Das 2-Methyl-1,8-octandiamin ist jedoch zur Zeit weder in der Neu- noch in der Altstoffverordnung erfasst und somit in Europa nicht zugelassen. Dies verhindert eine rasche Produkteinführung auf dem europäischen Markt.

In den Dokumenten EP 1 710 482, EP 1 741 549 und EP 1 741 553 werden Mehrschichtrohre sowie Mehrschichtschläuche für den Transport von Chemikalien und/oder Gasen bei hohen Temperaturen und Mehrschichtstrukturen mit einem semiaromatischen Polyamid aus 60 bis 100 Mol-% eines aliphatischen Diamins mit 9 bis 13 Kohlenstoffatomen und 50 bis 100 Mol-% Terephthalsäure und/oder Naphthalindicarbonsäure beansprucht. In den Beispielen werden PA9T, PA9N, PA12T und PA12N jeweils mit 100 Mol-% aliphatischem Diamin mit 9 und 12 Kohlenstoffatomen verwendet. In der Beschreibung wird darauf hingewiesen, dass andere Diamine wie z.B. Hexamethylendiamin in einem Bereich, in dem die exzellenten Eigenschaften der Mehrschichtrohe, - schläuche oder -strukturen nicht beeinträchtigt werden, und in einer Menge von bevorzugt 10 Mol-% oder weniger eingesetzt werden können.

In der EP 0 368 281 geht es um Blends von Ethylen-Glycidyl-Methacrylat-Copolymer mit optional Polyarylat und mit einem Polyamid, hergestellt aus einem aliphatischen oder alicyclischen Diamin und einer aromatischen Dicarbonsäure. Insbesondere wird als aromatische Dicarbonsäure Terephthalsäure herausgestrichen. In Bezug auf das aliphatische, lineare oder verzweigte Diamin mit 4 bis 25 Kohlenstoffatomen findet man in diesem Dokument eine enorme Vielzahl von Möglichkeiten genannt. Einen Hinweis, die einzelnen Mitglieder dieser Liste auch als Mischung einzusetzen, gibt es im Zusammenhang mit der enormen Vielzahl von genannten Möglichkeiten nicht ausdrücklich. Betrachtet man die spezifischen Beispiele in diesem Dokument, so stellt man fest, dass in diesen ausschliesslich Systeme auf Basis 1,6-Hexandiamin, Terephthalsäure und Isophthalsäure oder Adipinsäure (PA6T/6I und PA6T/66) offenbart werden.

In der EP 0 697 429 werden ganz allgemein Copolyamide auf Basis von aliphatischen Diaminen mit 4 bis 14 Kohlenstoffatomen und Terephthalsäure mit einer besonderen Verteilung der Segmente beschrieben. Hinsichtlich der Möglichkeiten der Auswahl des Diamins gibt es in diesem Dokument eine Vielzahl von Möglichkeiten. Bevorzugte Diamine sind 1,6-Hexandiamin, 2-Methyl-1,5-Pentandiamin (MPMD) und 1,12-Dodecandiamin. Bevorzugte Polyamide sind PA6T/61, PA6T/66, PA6T/6, PA6T/66/61, PA61 /66/6, PA12T/66, PA12T/126, PA12T/6I, PA121/121 und PA12T/6. Betrachtet man die spezifischen Beispiele, so findet man dort nur Systeme mit 1,6-Hexandiamin, Terephthalsäure, Adipinsäure und Caprolactam.

In der US 3,839,296 geht es ganz allgemein um Systeme der Bauweise xT, wobei für das Diamin x eine enorme Liste gegeben wird. In den spezifischen Beispielen wird immer nur x = 1,12-Dodecandiamin angegeben.

In der JP 2002293926 geht es im Abstract darum, ein Copolyamid zur Verfügung zu stellen, welches als Diamin (Komponente a) 1,10-Diaminodecan aufweist, und welches auf der anderen Seite als Disäure auf jeden Fall Terephthalsäure und gegebenenfalls weitere Systeme aufweist wie beispielsweise eine weitere aromatische, von Terephthalsäure verschiedene Disäure, oder C4-20 Disäuren. Des weiteren wird eine grosse Liste von möglichen Diaminen als Ersatz von 1,10-Decandiamin angegeben, es wird kein spezifischer Hinweis darauf gemacht, eine Kombination (Mischung) zu verwenden. In den spezifischen Beispielen wird stets nur 1,10-Decandiamin verwendet. Es gibt ein einziges Beispiel (Vergleichsbeispiel 3), in welchem ein anderes Diamin verwendet wird, dort wird 1,10-Decandiamin vollständig durch 1,6-Hexandiamin ersetzt und mit Terephthalsäure und Adipinsäure kombiniert.

WO-A-2004/015010 beschreibt Polyamidformmassen, die 20 bis 80 Gew.-% eines Polyamids oder Polyamidblends mit wiederfahrenden Einheiten, die von Terephthalsäure oder deren Derivaten und C₁₀-C₁₀ Diaminen abgeleitet sind, enthalten.

### DARSTELLUNG DER ERFINDUNG

Der Erfindung liegt demnach unter anderem die Aufgabe zugrunde, eine Polyamid-Formmasse zur Verfügung zu stellen, welche sowohl hinsichtlich der mechanischen Eigenschaften auch unter nassen oder feuchten Bedingungen als auch hinsichtlich der Verarbeitungsmöglichkeiten im Vergleich zum Stand der Technik verbessert ist. Des weiteren sollen Formteile auf Basis einer derartigen Formmasse zur Verfügung gestellt werden sowie Verfahren zur Herstellung einer derartigen Formmasse.

Vorliegend wird spezifisch entsprechend eine Polyamid-Formmasse mit folgender Zusammensetzung vorgeschlagen:
(A) 30 - 100 Gew.-% wenigstens eines Copolyamids 10T/6T, wobei dieses aufgebaut ist aus
   (A1) 40 bis 95 Mol-% 10T-Einheiten, gebildet aus den Monomeren 1,10-Decandiamin und Terephthalsäure
   (A2) 5 bis 60 Mol-% 6T-Einheiten, gebildet aus den Monomeren 1,6-Hexandiamin und Terephthalsäure
(B) 0 - 70 Gew.-% Verstärkungs- und/oder Füllstoffe
(C) 0 - 50 Gew.-% Additive und/oder weitere Polymere,
wobei die Komponenten A bis C zusammen 100% ergeben.

Dabei können bis zu 30% der Monomeren innerhalb der Komponente (A) ersetzt werden, das heisst, das obige gilt einerseits mit der Massgabe, dass in der Komponente (A) unabhängig voneinander in (A1) und/oder (A2) bis zu 30 Mol-%, bezogen auf die Gesamtmenge der Dicarbonsäuren, der Terephthalsäure ersetzt sein können durch andere aromatische, aliphatische oder cycloaliphatische Dicarbonsäuren mit 6 bis 36 Kohlenstoffatomen.

Des weiteren gilt das obige andererseits mit der Massgabe, dass in der Komponente (A) unabhängig voneinander in (A1) und/oder (A2) bis zu 30 Mol-% von 1,10-Decandiamin respektive 1,6-Hexandiamin, bezogen auf die Gesamtmenge der Diamine, ersetzt sein können durch andere Diamine mit 4 bis 36 Kohlenstoffatomen.

Zu guter letzt gilt das obige weiter mit der Massgabe, dass nicht mehr als 30 Mol-% in der Komponente (A), bezogen auf die Gesamtmenge der Monomeren, durch Lactame oder Aminosäuren gebildet sein können.

Es ist aber bevorzugt, wenn diese Ersetzung der Monomeren innerhalb der Komponente (A) entsprechend den obigen Massgaben weniger als 20% ausmacht, bevorzugt weniger als 10%, und insbesondere bevorzugt findet überhaupt keine derartige Ersetzung Anwendung. Insgesamt gilt also als weitere Massgabe, dass die Summe der Monomere, die Terephthalsäure, 1,6-Hexandiamin und 1,10-Decandiamin ersetzen (d.h. der Gesamt-Anteil an anderen aromatischen, aliphatischen oder cycloaliphatischen Dicarbonsäuren mit 6 bis 36 Kohlenstoffatomen, an anderen Diaminen mit 4 bis 36 Kohlenstoffatomen, und an Lactamen oder Aminosäuren) eine Konzentration von 30 Mol-%, bevorzugt 20 Mol-%, insbesondere 10 Mol-% in Bezug auf die Gesamtmenge der in Komponente A eingesetzten Monomere nicht überschreitet.

Es zeigt sich nämlich unerwarteter Weise, dass genau die oben angegebenen Verhältnisse der einzelnen Komponenten im Copolyamid zu besonderen Eigenschaften führen. So zeigte sich, dass unterhalb einer Konzentration von 40 Mol-% 10T die Schmelzpunkte der Copolyamide 10T/6T rasch ansteigen, so dass diese Zusammensetzungen nicht mehr befriedigend verarbeitet werden können. Die vorgeschlagene Zusammensetzung führt zu hervorragenden mechanischen Eigenschaften selbst bei nassen oder feuchten Bedingungen, und es werden insbesondere bei zusätzlicher Verwendung von Verstärkungsfasern unerwartet hohe Wärmeformbeständigkeiten erreicht.

Im Stand der Technik wird die spezifische Kombination von 1,10-Decandiamin und 1,6-Hexandiamin nicht besonders empfohlen. Geschweige denn findet sich im Stand der Technik ein Hinweis auf die speziellen Mol-Verhältnisse, welche die vorliegend gefundenen positiven Eigenschaften gewährleisten können. Die niedrige Wasseraufnahme einer Kombination PA10T/6T wird im Stand der Technik noch viel weniger offenbart und es wird ebenfalls nicht offenbart, dass diese Kombination PA10T/6T zusammen mit Verstärkungsfasern hohe Wärmeformbeständigkeiten über 260°C aufweist.

Die vorliegende Erfindung stellt entsprechend eine Polyamid-Formmasse mit folgenden Eigenschaften zur Verfügung:
- hohe Wärmeformbeständigkeit (Schmelzpunkt über 270°C oder HDT A eines mit 50% Glasfasern verstärkten PA ist grösser 260°C)
- gute Verarbeitbarkeit (Schmelzpunkt unter 320°C; Kristallisationsverhalten)
- niedrige Wasseraufnahme (< 5% nach 240h in Wasser bei 95°C)
- unveränderte mechanische Eigenschaften nach Wasseraufnahme (z.B. Zug-E-Modul nass > 100% des Zug-E-Modul trocken, Fliess- oder Bruchfestigkeit nass > 85% der Fliess- oder Bruchfestigkeit trocken)
- gute Oberflächenqualität der glasfaserverstärkten Produkte.
- hohe Dimensionsstabilität.

Eine erste bevorzugte Ausführungsform ist also dadurch gekennzeichnet, dass die Komponente (A) und/oder die ganze Polyamid-Formmasse einen Schmelzpunkt respektive eine Formbeständigkeitstemperatur nach ISO-R 75, Verfahren A (DIN 53 461) von mehr als 260°C oder mehr als 270°C, bevorzugtermassen im Bereich zwischen 270 und 320 °C aufweist, insbesondere bevorzugt im Bereich von 270-310°C.

Weiterhin werden die Verhältnisse bevorzugtermassen so eingestellt, dass die Komponente (A) und/oder die ganze Polyamid-Formmasse eine Wasseraufnahme von weniger als 5 Gew.-%, bevorzugt weniger als 4 Gew.-% und insbesondere weniger als 3.5 Gew.-% aufweist, z.B. nach 240h in Wasser bei 95°C.

Es zeigt sich zudem, dass vorteilhafter Weise das Verhältnis der Zug-E-Module von nassem zum trockenem Zustand grösser oder gleich 0.95, bevorzugtermassen grösser oder gleich 1.00, insbesondere bevorzugtermassen grösser oder gleich 1.05 ist. Ebenfalls vorteilhaft ist es, wenn das Verhältnis der maximalen Zugfestigkeiten von nassem und trockenem Zustand grösser oder gleich 0.85, bevorzugtermassen grösser 0.90, insbesondere grösser oder gleich 0.95 ist. Die maximale Zugfestigkeit entspricht der maximalen Festigkeit im Zug-Dehnungs-Diagramm, das gemäss ISO 527 ermittelt wurde.

Für ein genügend hohes Molekulargewicht, eine hohe relative Viskosität, gleichzeitig gute Fliessfähigkeit und hohen MVR (melt volume-flow rate) erweist es sich als vorteilhaft, wenn die eingesetzten Monomeren eine genügende Reinheit haben. Die Reinheit ist insbesondere beim Diamin vorteilhafter Weise hoch eingestellt, so ist es bevorzugt, dass das eingesetzte 1,10-Decandiamin einen Schmelzpunkt über 63°C aufweist und/oder einen Gesamtdiamin-Gehalt über 99% aufweist, und/oder einen Aminonitril-Gehalt unter 0.5 Prozent aufweist, und/oder die Farbe nach APHA (American Public Health Association color index) unter 10 Einheiten liegt.

Wie insbesondere aus den weiter unten angegebenen grafischen Darstellungen erkannt werden kann, erweist es sich hinsichtlich einer optimalen Einstellung von Schmelzpunkt respektive der Wasseraufnahme als vorteilhaft, wenn innerhalb der Komponente (A) die Anteile (A1) 40 bis 90 Mol-% ausmachen und (A2) 10 bis 60 Mol-%. Bevorzugt wird dabei insbesondere folgendes Verhältnis: (A1) 40 bis 80 Mol-% und (A2) 20 bis 60 Mol-%, und insbesondere folgendes Verhältnis (A1) 40 bis 75 Mol-% und (A2) 25 bis 60 Mol-%.

Wie bereits erläutert ist es bevorzugt, wenn das Copolyamid 10T/6T der Komponente (A) im wesentlichen ausschliesslich, bevorzugt vollständig ausschliesslich auf Terephthalsäure als Dicarbonsäure basiert, und/oder wenn das Copolyamid 10T/6T der Komponente (A) im wesentlichen ausschliesslich, bevorzugt vollständig ausschliesslich auf 1,10-Decandiamin für (A1) und 1,6-Hexandiamin für (A2) als Diamin basiert und/oder wenn die Komponente (A) im wesentlichen ausschliesslich, bevorzugt vollständig ausschliesslich aus den Bestandteilen (A1) und (A2) besteht.

Gemäss einer weiteren bevorzugten Ausführungsform handelt es sich bei der Komponente (B) wenigstens teilweise um Glas- und/oder Kohlenstofffasern. Bei der Komponente (C) handelt es sich normalerweise generell um Additive und/oder weitere Polymere beispielsweise ausgewählt aus der folgenden Gruppe : Schlagzähmodifikatoren, Haftvermittler, Kristallisations-Beschleuniger oder -Verzögerer, Fliesshilfsmittel, Gleitmittel, Entformungsmittel, Weichmacher, Stabilisatoren, Verarbeitungshilfsmittel, flammhemmende Zusätze, Antistatika, Pigmente, Farb- und Markierungsstoffe, Nanoteilchen in Plättchenform, Leitfähigkeitsadditive, wie Russ, Graphitpulver oder Kohlenstoffnanofibrillen, Residuen aus Polymerisationsverfahren wie Katalysatoren, Salze und deren Derivate, sowie Regler wie Monosäuren oder Monoamine.

Die erfindungsgemässe Formmasse enthält in einer weiteren Ausführungsform weiterhin noch 8 - 25 Gew.-%, bevorzugt 10 - 22 Gew.-% und insbesondere 10 - 18 Gew.-% eines Flammschutzmittels (als teilweiser Bestandteil der Komponente (C) oder diese Komponente (C) als ganzes bildend). Bevorzugtermassen ist das Flammschutzmittel halogenfrei.

Das Flammschutzmittel in der Komponente (C) oder die Komponente (C) als ganzes bildend umfasst dabei bevorzugtermassen 60 - 100 Gew.-%, bevorzugt 70 - 98 Gew.-%, insbesondere 80 - 96 Gew.-% eines Phosphinsäuresalzes und/oder Diphosphinsäuresalzes (Komponente (C1)) sowie 0 - 40 Gew.-%, bevorzugt 2 - 30 Gew.-%, insbesondere 4 - 20 Gew.-% eines stickstoffhaltigen Synergisten und/oder eines Stickstoff und Phosphor enthaltenden Flammschutzmittels (Komponente (C2)).

Bei Komponente (C2) handelt es sich bevorzugt um Melamin oder Kondensationsprodukte des Melamins, wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure oder Gemische davon.

Als Komponente (C2) wird insbesondere Melaminpolyphosphat bevorzugt. Derartige Flammschutzmittel sind aus dem Stand der Technik bekannt. Hierzu wird auf die DE 103 46 3261 verwiesen.

Bevorzugt wird als Komponente (C1) ein Phosphinsäuresalz der allgemeinen Formel (I) und/oder Formel (II) und/oder deren Polymere 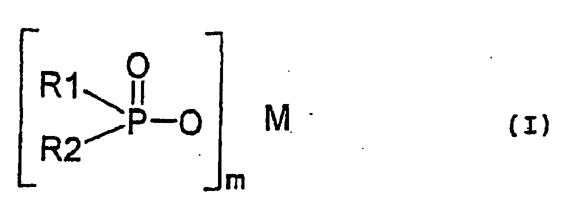 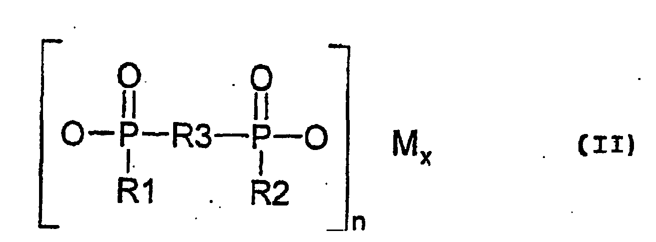 worin
- R1, R2: gleich oder verschieden sind und bevorzugt C1-C8-Alkyl, linear oder verzweigt und/oder Aryl sind;
- R3: C1-C10-Alkylen, linear oder verzweigt, C6-C10-Arylen, -Alkylarylen oder Arylalkylen sind;
- M: ein Metallion aus der 2. oder 3. Haupt- oder Nebengruppe des Periodensystems ist; und
- m: 2 oder 3;
- n: 1 oder 3;
- x: 1 oder 2
bedeuten.

Als Metallion M werden bevorzugt A1, Ca und Zn verwendet.

In Kombination mit den Flammschutzkomponenten (C1) und (C2) können gegebenenfalls zusätzlich 0.5 bis 5 Gew.-%, bezogen auf die Summe (C1) und (C2), an sauerstoff-, stickstoff- oder schwefelhaltigen Metallverbindungen als Stabilisatoren (Komponente (C3)) zugegeben werden. Dabei bevorzugte Metalle sind Aluminium, Calcium, Magnesium und Zink. Geeignete Verbindungen sind ausgewählt aus der Gruppe der Oxide, Hydroxide, Carbonate, Silikate, Borate, Phosphate, Stannate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Magnesiumhyroxid, Aluminiumhydroxid, Böhmit, Dihydrotalcit, Hydrocalumit, Calciumhydroxid, Zinnoxidhydrat, Zinkhydroxid, Zinkborat, Zinksulfid, Zinkphosphat, Calciumcarbonat, Calciumphosphat, Magnesiumcarbonat, basisches Zinksilikat, Zinkstannat, Calciumstearat, Zinkstearat, Magnesiumstearat, Kaliumpalmitat, Magnesiumbehenat.

Bei den erfindungsgemässen Polyamid-Formassen bzw. bei den daraus hergestellten Formkörpern ist somit weiterhin hervorzuheben, dass in Kombination zu den vorstehend beschriebenen ausgezeichneten Eigenschaften auch ein herausragender Flammschutz erreicht wird. Die Formmasse ist nach UL-Klassifizierung V0 bei 0,8 mm dicken Probenkörper (UL-94, Prüfung nach den Normen der Underwriters Laboratories (U.L.), vgl. www.ulstandards.com).

Die Erfindung betrifft weiterhin ein kurzfaserverstärktes Granulat, ein langfaserverstärktes Stäbchengranulat, Halbzeug oder Formkörper aus einer Polyamid-Formmasse, wie sie oben beschrieben ist und auch in weiteren Details weiter unten beschrieben wird, insbesondere bevorzugt zur Verwendung in feuchter und/oder nasser Umgebung.

Zudem betrifft die vorliegende Erfindung ein Verfahren zur Herstellung einer Polyamid-Formmasse wie sie oben beschrieben ist und auch in weiteren Details weiter unten beschrieben wird, wobei dieses Verfahren bevorzugtermassen dadurch gekennzeichnet ist, dass bei der Herstellung der Komponente (A) wenigstens ein Polykondensationskatalysator den Monomermischungen zugesetzt wird, bevorzugtermassen in einem Anteil von 0.005 bis 1.5 Gewichts-%, wobei es sich dabei beispielsweise um Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie Na, K, Mg, Ga, Zn oder A1 und/oder deren Ester wie Triphenylphosphat, Triphenylphosphit oder Tris-(nonylphenyl)-phosphit oder Mischungen davon handelt.

In Bezug auf die gegebenenfalls die Terephthalsäure ersetzenden Dicarbonsäuren gilt folgendes: Als Dicarbonsäure enthalten die erfindungsgemäss eingesetzten teilaromatischen Copolyamide (A) PA10T/6T, dies in einem Molverhältnis von insbesondere 40-95/5-60, im Wesentlichen Terephthalsäure. Ein Teil der Terephthalsäure kann durch andere aromatische, aliphatische oder cycloaliphatische Dicarbonsäuren mit 6 bis 36 Kohlenstoffatomen in untergeordneter Menge von vorzugsweise nicht mehr als 30 Mol-% (bezogen auf die Gesamtmenge der Dicarbonsäuren) ersetzt sein. Zu den geeigneten aromatischen Dicarbonsäuren zählen die Naphthalindicarbonsäure (NDA) und die Isophthalsäure (IPS). Geeignete aliphatische Dicarbonsäuren sind Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimersäure. Geeignete cycloaliphatische Dicarbonsäuren sind die cis- und/oder trans-Cyclohexan-1,4-dicarbonsäure und/oder cis- und/oder trans-Cyclohexan-1,3-dicarbonsäure (CHDA).

In Bezug auf die gegebenenfalls 1,6-Hexandiamin respektive 1,10-Decandiamin ersetzenden Diamine gilt folgendes: Die erfindungsgemäss eingesetzten, teilaromatischen Copolyamide (A) PA10T/6T, enthalten im Wesentlichen ein Gemisch aus 1,6-Hexandiamin und 1,10-Decandiamin im Molverhältnis 5/95 bis 60/40. Daneben können Diamine in untergeordneter Menge von vorzugsweise nicht mehr als 30 Mol-% (bezogen auf die Gesamtmenge der Diamine) durch andere Diamine mit 4 bis 36 Kohlenstoffatome ersetzt sein. Beispiele für lineare oder verzweigte, aliphatische Diamine sind 1,4-Butandiamin, 1,5-Pentandiamin, 2-Methyl-1,5-pentandiamin (MPMD), 1,8-Octandiamin (OMDA), 1,9-Nonandiamin (NMDA), 2-Methyl-1,8-octandiamin (MODA), 2,2,4-Trimethylhexamethylendiamin (TMHMD), 2,4,4-Trimethylhexamethylendiamin (TMHMD), 5-Methyl-1,9-nonandiamin, 1,11-Undecandiamin, 2-Butyl-2-ethyl-1,5-pentandiamin, 1,12-Dodecandiamin, 1,13 Tridecandiamin, 1,14-Tetradecandiamin, 1,16-Hexadecandiamin, und 1,18-Octadecandiamin. Als cycloaliphatische Diamine können beispielsweise Cyclohexandiamin, 1,3-Bis-(Aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als araliphatisches Diamin sei m-Xylylendiamin (MXDA) erwähnt.

In Bezug auf die gegebenenfalls zusätzlich vorhandenen Lactame und Aminosäuren in der Komponente (A) gilt folgendes: Neben 1,6-Hexandiamin, 1,10-Decandiamin und Terephthalsäure (unter Berücksichtigung der oben bereits diskutierten wenigstens optionalen teilweisen Ersetzungen dieser Bestandteile) können die erfindungsgemäss eingesetzten, teilaromatischen Copolyamide (A) PA10T/6T, auch Lactame oder Aminosäuren in untergeordneter Menge von vorzugsweise nicht mehr als 30 Mol-% (bezogen auf die Gesamtmenge der Monomeren) enthalten. Geeignete Verbindungen sind beispielsweise Caprolactam (CL), α,ω-Aminocapronsäure, α,ω-Aminononansäure, α,ω-Aminoundecansäure (AUA), Laurinlactam (LL) und ω-Aminododecansäure (ADA).

Für höhere Glasübergangstemperaturen sind die Zusätze von NDA, IPS, CHDA, MPMD, MODA, TMHMD, BAC, PACM und MACM bevorzugt. Besonders bevorzugt sind NDA, BAC und PACM.

Für tiefere Glasübergangstemperaturen werden die Zusätze von langkettigen Monomeren wie Dodecandisäure, Brassylsäure, Tetradecandisäure, Pentadecandisäure, Hexadecandisäure, Octadecandisäure, Dimersäure, 1,12-Dodecandiamin, 1,13-Tridecandiamin, 1,14-Tetradecandiamin, 1,16-Hexadecandiamin und 1,18-Octadecandiamin bevorzugt. Besonders bevorzugt sind Dodecandisäure und 1,12-Dodecandiamin.

Für ein genügend hohes Molekulargewicht, hohe relative Viskosität, gleichzeitig gute Fliessfähigkeit und hohen MVR sollten bevorzugt die eingesetzten Monomeren eine genügende Reinheit haben. Insbesondere beim 1,10-Decandiamin ist es vorteilhaft, wenn der Schmelzpunkt über 63°C, der Gesamtdiamingehalt über 99%, der Aminonitrilgehalt unter 0.5% und die Farbe nach APHA unter 10 Einheiten liegt.

Als Polykondensationskatalysatoren können den Monomermischungen 0.005 bis 1.5 Gew.-% Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z.B. Na, K, Mg, Ga, Zn oder A1 und/oder deren Ester wie z.B. Triphenylphosphat, Triphenylphosphit oder Tris-(nonylphenyl)-phosphit zugesetzt werden. Bevorzugt sind hypophosphorige Säure und Natriumhydrogenhypophosphit Monohydrat in einer Menge von 100 bis 500 ppm Phosphor bezogen auf das teilaromatische Copolyamid (A) PA10T/6T.

Weil Diamine flüchtigere Verbindungen als Dicarbonsäuren sind, entsteht beim Herstellprozess ein Diaminverlust. Beim Verdampfen des Wassers, beim Austrag des Vorkondensats und bei der Nachkondensation in der Schmelze oder in der Festphase geht Diamin verloren. Zum Ausgleich des Diaminverlustes wird deshalb bevorzugt dem Monomeransatz ein Diaminüberschuss von 1 bis 8 Gew.-% bezogen auf die Gesamtmenge der Diamine zugesetzt. Mit dem Diaminüberschuss wird auch das Molekulargewicht und die Verteilung der Endgruppen geregelt. Bei dem angewendeten Verfahren gemäss den Beispielen entsteht bei einem Diaminüberschuss von kleiner als 3% ein Carboxylendgruppenüberschuss von 10 bis 150 mmol/kg. Bei einem Diaminüberschuss von mehr als 3% entsteht ein Aminoendgruppenüberschuss von 10 bis 150 mmol/kg.

Zur Reglung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, u.a. Die Regler können einzeln oder in Kombination benutzt werden. Es können auch andere monofunktionelle Verbindungen als Regler eingesetzt werden, die mit einer Amino- oder Säuregruppe reagieren können wie Anhydride, Isocyanate, Säurehalogenide oder Ester. Die übliche Einsatzmenge der Regler liegt zwischen 10 und 200 mmol pro kg Polymer.

Um einen schon früh rührbaren, homogenen Ansatz zu erhalten, wird dem Monomergemisch vorzugsweise Wasser beigegeben. Die Wassermenge kann 5 bis 50 Gew.-% bezogen auf den Gesamtansatz betragen. Die Zugabe des Wassers kann zusammen mit den Diaminen in Form von wässrigen Lösungen der Diamine oder zusammen mit der Dicarbonsäure als wässrige Aufschlämmung oder separat erfolgen. Durch die Wassermenge sowie den eingestellten Druck (bei dem Wasser verdampft wird) und der Verweilzeit kann das Molekulargewicht sowie die Schüttdichte des Vorkondensats gesteuert werden.

Des weiteren können die Formmassen mit bis zu 70 Gew.-% Füll- und Verstärkungsstoffen (Glas- und/oder Kohlenstofffasern (Carbonfasern, Graphitfasern)) modifiziert werden. Die Verstärkung kann mit Kurzfasern (z.B. Schnittglas mit einer Länge von 2 - 50 mm) oder Endlosfasern (Roving) erfolgen.

Dabei werden Glasfasern mit nicht-kreisförmiger Querschnittsfläche und einem Abmessungsverhältnis von der Hauptquerschnittsachse zur Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Die Glasfaser selbst kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind. Die Glasfasern für sich gesehen, d.h. bei flachen aber auch bei runden oder eckigen Fasern mit Abmessungsverhältnis von der Hauptquerschnittsachse zur Nebenquerschnittsachse von weniger als 2, können auch mit einer Amino- oder Epoxysilanbeschichtung versehen sein.

Die erfindungsgemässen flachen Glasfasern mit nicht-kreisförmiger Querschnittsfläche werden bevorzugt als Kurzglasfaser (Schnittglas mit einer Länge von 0.2 bis 20 mm, bevorzugt 2 - 12 mm) eingesetzt.

Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt.

Zur Verstärkung der erfindungsgemässen Formmassen können auch Mischungen von Glasfasern mit kreisförmigem und nicht-kreisförmigem Querschnitt verwendet werden,
wobei der Anteil an flachen Glasfasern wie oben definiert bevorzugtermassen überwiegt, d.h. mehr als 50 Gew.-% der Gesamtmasse der Fasern ausmacht. Als Verstärkung kommen weiterhin auch Kombinationen der Glasfasern (im Querschnitt kreisförmige und/oder nicht-kreisförmige Glasfasern) mit Kohlenstofffasern und/oder synthetischen Fasern, wie z.B. Aramidfasern, und/oder Basaltfasern infrage.

Werden verstärkte Formmassen mit guter Fliessfähigkeit und guter Oberflächenqualität angestrebt, insbesondere in Kombination mit Flammschutzmitteln, dann bestehen die Verstärkungsfasern bevorzugt überwiegend (d.h. z.B. mehr als 80 Gew.-% oder sogar mehr als 90 Gew.-%) aus flachen Glasfasern oder sogar ausschliesslich aus flachen Glasfasern.

Die erfindungsgemäss als Roving (Füllstoffkomponente B) eingesetzten Glasfasern weisen einen Durchmesser von 10 bis 20 µm, bevorzugt von 12 bis 18 µm auf, wobei der Querschnitt der Glasfasern rund, oval, elliptisch, elliptisch mit Einschnürung(en), polygonal, rechteckig oder nahezu rechteckig sein kann. Besonders bevorzugt werden sogenannte flache Glasfasern mit einem Verhältnis der Querschnittsachsen von 2 bis 5. Insbesondere werden erfindungsgemäss E-Glasfasern verwendet. Es können aber auch alle anderen Glasfasersorten, wie z.B. A-, C-, D-, M, S-, R-Glasfasern oder beliebige Mischungen davon oder Mischungen mit E-Glasfasern eingesetzt werden.

Bei langfaserverstärkten Formmassen ergeben sich höhere Zähigkeiten und somit noch metallähnlichere Eigenschaften, wenn anstatt der üblichen Endlosglasfaser mit einem Durchmesser von 15 bis 19 µm, solche mit einem Durchmesser von 10 bis 14 µm, insbesondere solche mit einem Durchmesser von 10 bis 12 µm verwendet werden.

Die erfindungsgemässen Polyamidfornunassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschliessend abgekühlt und geschnitten wird.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden, wobei besonders gute Eigenschaften des Formteils mit schonenden Verarbeitungsverfahren erreicht werden. In diesem Zusammenhang bedeutet schonend vor allem, dass ein übermässiger Faserbruch und die damit einhergehende starke Reduktion der Faserlänge weitgehend vermieden wird. Beim Spritzguss bedeutet dies, dass Schnecken mit grossem Durchmesser und tiefem Kompressionsverhältnis, insbesondere kleiner 2, und grosszügig dimensionierte Düsen- und Angusskanäle bevorzugt zum Einsatz kommen. Ergänzend sollte dafür gesorgt werden, dass die Stäbchengranulate mit Hilfe von hohen Zylindertemperaturen rasch aufschmelzen (Kontakterwärmung) und die Fasern nicht durch übermässige Scherbeanspruchung zu stark zerkleinert werden. Unter Berücksichtigung dieser Massnahmen werden erfindungsgemäss Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere beim Zug-E-Modul, der Reissfestigkeit und der Kerbschlagzähigkeit erreicht.

Die beim Pultrusionsverfahren eingesetzten Endlos-Kohlenstofffasern weisen einen Durchmesser von 5 bis 10 µm, bevorzugt 6 bis 8 µm auf. Die Endlos-Kohlenstofffasern können allein oder in Kombination mit Endlos-Glasfasern (kreisförmiger und/oder nicht-kreisförmiger Querschnitt) eingesetzt werden.

Zur Beschleunigung der Faserimprägnierung können die Fasern auf Temperaturen bis 400°C mit Hilfe einer geeigneten IR-, Kontakt-, Strahlungs- oder Heissgasvorwärmung vorgeheizt werden. Vorrichtungen mit Spreizoberflächen innerhalb der Imprägnierkammer sorgen für eine vollständige Imprägnierung der Fasern mit der Polymerschmelze. Aus der Imprägniereinheit austretende Stränge können durch kontrollierte Walzensysteme geformt werden, so dass Granulat mit kreisförmigem, elliptischem oder rechteckigem Querschnitt erhalten wird.

Zur Verbesserung der Matrixanbindung und des Faserhandlings können die Fasern mit chemisch unterschiedlichen Schichten, wie sie für Glas- und Kohlefasern im Stand der Technik bekannt sind, beschichtet sein.

Als weitere Komponente können die thermoplastischen Formmassen vorzugsweise einen teilchenförmigen Füllstoff oder eine Mischung aus zwei oder mehr unterschiedlichen Füllstoffen auch in Kombination mit Verstärkungsstoffen enthalten. Beispielsweise kommen mineralische teilchenförmige Füllstoffe auf Basis von Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen in Frage. Die Füllstoffe können auch oberflächenbehandelt sein.

Die Formmassen können Stabilisatoren, Verarbeitungshilfsmittel und Schlagzähmodifikatoren sowie weitere Additive enthalten.

In einer weiteren Ausführungsform enthält die erfindungsgemässe Formmasse bis zu 45 Gew.-% eines oder mehrerer Schlagzähmodifikatoren (SZM). Bevorzugt wird eine SZM-Konzentration im Bereich zwischen 5 und 30 Gew.-%.

Der Schlagzähmodifier, der als Bestandteil der Komponente C Einsatz finden kann, kann ein Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein. Der Schlagzähmodifier (C) kann auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und Copolymeres wie Ethylen-Propylen-, Ethylen-Propylen-Dien- und Ethylen-Octen- oder Ethylen-Vinylacteat-Kautschuk oder ein unpolares oder polares Olefinhomo- und Copolymeres, das durch Pfropfen oder Copolymerisation mit Säureanhydriden, (Meth)acrylsäure und deren Ester entstanden ist, sein. Der Schlagzähmodifier (C) kann auch ein carbonsäure-funktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen ist, einschliesslich solchen Copolymeren, in denen die Säuregruppen teilweise mit Metallionen neutralisiert sind.

Bevorzugte SZM auf Basis von Styrolmonomeren (Styrol und Styrolderivate) und anderen vinylaromatischen Monomeren sind Blockcopolymere aufgebaut aus alkenylaromatischen Verbindungen und einem konjungierten Dien sowie hydrierte Blockcopolymere aus einer alkenylaromatischen Verbindung und konjungierten Dienen oder Kombinationen dieser SZM-Typen. Das Blockcopolymer enthält mindestens einen Block abgeleitet von einer alkenylaromatischen Verbindung (A) und wenigstens einem Block abgeleitet von einem konjungierten Dien (B). Bei den hydrierten Blockcopolymeren wurde der Anteil an aliphatisch ungesättigten Kohlenstoff-Kohlenstoff-Doppelbindungen durch Hydrierung reduziert. Als Blockcopolymere sind Zwei-, Drei-, Vier- und Polyblockcopolymere mit linearer Struktur geeignet. Jedoch sind verzweigte und sternförmige Strukturen ebenfalls erfindungsgemäss einsetzbar. Verzweigte Blockcopolymere erhält man in bekannter Weise, z.B. durch Pfropfreaktionen von polymeren "Seitenästen" auf eine Polymer-Hauptkette.

Als alkenylaromatische Monomere können neben oder in Mischung mit Styrol, auch vinylaromatische Monomere verwendet werden, die am aromatischen Ring und/oder an der C=C-Doppelbindung mit C1-20-Kohlenwasserstoffresten oder Halogenatomen substituiert sind.

Beispiele für alkenylaromatische Monomere sind Styrol, p-Methylstyrol, α-Methylstyrol, Ethylstyrol, tert.-Butylstyrol, Vinyltoluol, 1,2-Diphenylethylen, 1,1-Diphenylethylen, Vinylxylole, Vinyltoluole, Vinylnaphthaline, Divinylbenzole, Bromstyrole, Chlorstyrole, sowie Kombinationen davon. Bevorzugt werden Styrol, p-Methylstyrol, alpha-Methylstyrol und Vinylnaphthalin.

Bevorzugt verwendet man Styrol, α-Methylstyrol, p-Methylstyrol, Ethylstyrol, tert.-Butylstyrol, Vinyltoluol, 1,2-Diphenylethylen, 1,1-Diphenylethylen oder deren Mischungen. Besonders bevorzugt wird Styrol eingesetzt. Es können aber auch Alkenylnaphthaline verwendet werden.

Als Dienmonomere kommen z.B. 1,3-Butadien, 2-Methyl-1,3-butadien, 2,3-Dimethyl-1,3-butadien, 1,3-Pentadien, 1,3-Hexadien, Isopren, Chloropren und Piperylen in Betracht. 1,3-Butadien und Isopren sind bevorzugt, insbesondere 1,3-Butadien (nachfolgend kurz als Butadien bezeichnet).

Bevorzugt verwendet man als alkenylaromatisches Monomer Styrol und als Dienmonomer Butadien, d.h. bevorzugt ist das Styrol-Butadien-Blockcopolymer. In der Regel werden die Blockcopolymere durch anionische Polymerisation in an sich bekannter Weise hergestellt.

Weiterhin kann man zusätzlich zu den Styrol- und Dienmonomeren weitere Comonomere mitverwenden. Der Anteil der Comonomeren beträgt bevorzugt 0 bis 50, besonders bevorzugt 0 bis 30 und insbesondere 0 bis 15 Gew.-%, bezogen auf die Gesamtmenge der eingesetzten Monomeren. Geeignete Comonomere sind z.B. Acrylate, insbesondere C1-12-Alkylacrylate wie n-Butylacrylat oder 2-Ethylhexylacrylat, und die entsprechenden Methacrylate, insbesondere C1-12-Alkylmethacrylate wie Methylmethacrylat (MMA). Weitere mögliche Comonomere sind (Meth)acrylnitril, Glycidyl(meth)acrylat, Vinylmethylether, Dially- und Divinylether bifunktioneller Alkohole, Divinylbenzol und Vinylacetat.

Zusätzlich zum konjugierten Dien enthalten die hydrierten Blockcopolymere gegebenenfalls noch Anteile an niederen Kohlenwasserstoffen wie z.B. Ethylen, Propylen, 1-Buten, Dicyclopentadien oder nicht-konjugierte Diene. In den hydrierten Blockcopolymeren ist der Anteil der nicht reduzierten aliphatischen ungesättigten Bindungen, die aus dem Block B resultieren, kleiner 50%, bevorzugt kleiner 25%, insbesondere kleiner 10%. Die aromatischen Anteile aus Block A werden maximal zu 25% reduziert. Die hydrierten Blockcopolymere Styrol-(ethylen-butylen)-Zweiblock und Styrol-(ethylen-butylen)-styrol-Dreiblock-Copolymere werden durch Hydrierung von Styrol-butadien- und Styrol-butadien-styrol-Copolymeren erhalten.

Die Blockcopolymere bestehen bevorzugt zu 20 bis 90 Gew.-% aus Block A, insbesondere zu 50 bis 85 Gew.-% aus Block A. Das Dien kann in 1,2- oder in 1,4-Orientierungen in den Block B eingebaut werden.

Die Molmasse der Blockcopolymere beträgt 5'000 bis 500'000 g/mol, bevorzugt 20'000 bis 300'000 g/mol, insbesondere 40'000 bis 200'000 g/mol.

Geeignete hydrierte Blockcopolymere sind die kommerziell erhältlichen Produkte, wie z.B. KRATON® (Kraton Polymers) G1650, G1651, und G1652 sowie TUFTEC® (Asahi Chemical) H1041, H1043, H1052, H1062, H1141 und H1272.

Beispiele für nicht-hydrierte Blockcopolymere sind Polystyrol-polybutadien,

Polystyrol-poly(ethyen-propylen), Polystyrol-polyisopren, Poly(a-methyl-styrol)-polybutadien, Polystyrene-polybutadien-polystyrol (SBS), Polystyrol-Poly(ethylene-propylen)-polystyrol, Polystyrol-polyisopren-polystyrol und Poly(α-methylstyrol-polybutadiene-poly(α-methylstyrol), als auch Kombinationen davon.

Geeignete nicht-hydrierte Blockcopolymere, die kommerziell erhältlich sind, sind verschiedene Produkte mit dem Markennamen SOLPRENE® (Phillips), KRATON® (Shell), VECTOR® (Dexco) und SEPTON® (Kuraray).

Gemäss einer weiteren bevorzugten Ausfiihrungsform sind die erfindungsgemässen Formmassen dadurch gekennzeichnet, dass die Komponente C ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12-α-Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente C um Ethylen-Propylen-Kautschuk und/oder LLDPE und/oder VLDPE handelt.

Alternativ oder zusätzlich (beispielsweise in Mischung) kann C ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1)heptadien, Hexadien-1.4, Dicyclopentadien und/oder insbesondere 5-Ethylidennorbornen.

In Frage als Bestandteil für die Komponente C kommen zudem auch Ethylen-AcrylatCopolymere.

Weitere mögliche Formen als Bestandteile für die Komponente C sind die Ethylen-Butylen-Copolymere beziehungsweise Mischungen (Blends), welche derartige Systeme enthalten.

Bevorzugtermassen verfügt die Komponente C über Bestandteile mit Säureanhydridgruppen, die durch thermnische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden:

Maleinsäure, Maleinsäureanhydrid, Maleinsäuremonobutylester, Fumarsäure, Aconitsäure und/oder Itaconsäureanhydrid. Vorzugsweise werden 0.1 bis 4.0 Gew.-% eines ungesättigten Anhydrids an die Schlagzähkomponente als Bestandteil von C aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0%, insbesondere bevorzugt in einem Bereich von 0.3-0.7%. Auch möglich als Bestandteil der Komponente C ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7%.

Die oben angegebenen möglichen Systeme für die Komponente können auch in Mischungen verwendet werden.

Weiterhin kann die Komponente C über Bestandteile verfügen, welche über funktionelle Gruppen, wie z.B. Carbonsäure-, Ester-, Epoxy-, Oxazolin-, Carbodiimid-, Isocyanat-, Silanol- und Carboxylat-Gruppen verfügen, oder Kombinationen von zwei oder mehrerer der genannten funktionellen Gruppen enthalten. Monomere, die diese funktionellen Gruppen tragen, können durch Co-Polymerisation oder Pfropfung an das elastomere Polyolefin gebunden werden.

Ausserdem können die SZM auf Basis der Olefinpolymere auch durch Pfropfung mit einer ungesättigten Silanverbindung, z. B. Vinyltrimethoxysilan, Vinyltriethoxysilan, Vinyltriacetosilan, Methacryloxypropyltrimethoxysilan oder Propenyltrimethoxysilan modifiziert sein.

Die elastomeren Polyolefine sind statistische, alternierende oder segmentierte Copolymere mit linearer, verzweigter oder Core-Shell-Struktur und enthalten funktionelle Gruppen, die mit den Endgruppen der Polyamide reagieren können, so dass eine ausreichende Verträglichkeit zwischen Polyamid und SZM resultiert.

Die erfindungsgemäss eingesetzten SZM schliessen damit Homopolymere oder Copolymere von Olefinen, wie z.B. Ethylen, Propylen, Buten-1, oder Copolymere von Olefinen und copolymerisierbaren Monomeren, wie Vinylacetat, (Meth)acrylsäureester und Methylhexadien, ein.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolyrnere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylene-Propylen-Dien-Terpolymere sowie

Kombinationen der genannten Polymere.

Beispiele für kommerziell erhältliche Schlagzähmodifier, welche im Rahmen der Bestandteile der Komponente C eingesetzt werden können, sind:
TAFMER MC201: g-MAH (-0.6 %) Blend aus 67% EP Copolymer (20 Mol-% Propylen) + 33 % EB Copolymer (15mol-% Buten-1)): Mitsui Chemicals, Japan.
TAFMER MH5010: g-MAH (-0.6 %) Ethylen-Butylen-Copolymer; Mitsui.
TAFMER MH7010: g-MAH (-0.7 %) Ethylen-Butylen-Copolymer; Mitsui.
TAFMER MH7020: g-MAH (-0.7 %) EP-Copolymer, Mitsui.
EXXELOR VA1801: g-MAH (-0.7 %) EP-Copolymer; Exxon Mobile Chemical, US.
EXXELOR VA1803: g-MAH (0.5-0.9 %) EP Copolymer, amorph,, Exxon.
EXXELOR VA1810: g-MAH (-0.5 %) EP-Copolymer, Exxon
EXXELOR MDEX 94-1 1: g-MAH (0.7 %) EPDM, Exxon.
FUSABOND MN493D: g-MAH (-0.5 %) Ethylen-Octen-Copolymer, DuPont, US.
FUSABOND A EB560D (g-MAH) Ethylen-n-butyl-acrylat-copolymer, DuPont.
ELVALOY, DuPont.

Bevorzugt wird auch ein Ionomer, in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

Die erfindungsgemäss eingesetzten Polyamide PA10T/6T können mit Polyphenylenethern (PPE) gemischt werden. Die Polyphenylenether sind an sich bekannt. Sie werden nach üblichen Verfahren aus in ortho-Position durch Alkylgruppen disubstituierten Phenolen durch oxidative Kupplung hergestellt (vgl. US-Patente 3661848, 3378505, 3306874, 3306875 und 3639656). Für die Herstellung werden üblicherweise Katalysatoren auf Basis von Schwermetallen wie Kupfer, Mangan oder Kobalt in Kombination mit anderen Substanzen wie sekundären Aminen, tertiären Aminen, Halogenen oder Kombinationen davon benutzt. Auch Mischungen von Polyamiden mit Polyphenylenethern sind an sich bekannt, nicht aber mit der vorgeschlagenen Copolyamid-Komponente. Namentlich werden Mischungen aus Polyamid und PPE beispielsweise in der WO-A-2005/0170039, der WO-A-2005/0170040, der WO-A-2005/0170041 und der WO-A-2005/0170042 offenbart.

Geeignete Polyphenylenether sind beispielsweise Poly(2,6-diethyl-1,4-phenylen)ether, Poly(2-methyl-6-ethyl-1,4-phenylen)ether, Poly(2-methyl-6-propyl-1,4-phenylen) ether, Poly(2,6-dipropyl-1,4-phenylen)ether, Poly(2-ethyl-6-propyl-1,4-phenylen)ether oder Copolymere, wie solche, die 2,3,6-Trimethylphenol enthalten, ausserdem Polymermischungen. Bevorzugt ist Poly(2,6-dimethyl-1,4-phenylen)ether optional in Kombination mit 2,3,6-Trimethylphenoleinheiten. Die Polyphenylenether können in Form von Homopolymeren, Copolymer, Pfropfcopolymeren, Blockcopolymer oder Ionomeren eingesetzt werden.

Geeignete Polyphenylenether weisen im allgemeinen eine Grenzviskosität im Bereich von 0,1 bis 0,6 dl/g, gemessen in CHCl3 bei 25°C, auf. Dies entspricht einem Molekulargewicht Mn (Zahlenmittelwert) von 3'000 bis 40'000 und einem Gewichtsmittelwert des Molekulargewicht Mw von 5'000 bis 80'000. Es ist möglich, eine Kombination eines hochviskosen und eines tiefviskosen Polyphenylenethers einzusetzen. Das Verhältnis der beiden unterschiedlich viskosen Polyphenylenethern hängt von den Viskositäten und den angestrebten physikalischen Eigenschaften ab.

Die erfindungsgemässen Blends des PA10T/6T können 10 bis 45 Gew.-% Polyphenylenether und wahlweise bis zu 30 Gew.-%, bevorzugt bis zu 15 Gew.-% Schlagzähmodifikator enthalten. Für eine bessere Verträglichkeit werden Verträglichkeitsvermittler in Form von polyfunktionellen Verbindungen eingesetzt, die mit dem Polyphenylenether, dem Polyamid oder mit beiden wechselwirken. Die Wechselwirkung kann chemisch (z.B. durch Pfropfung) und/oder physikalisch (z.B. durch Beeinflussung der Oberflächeneigenschaften der dispersen Phase) sein.

Die Verträglichkeitsvermittler können polyfunktionelle Verbindungen sein, die mindestens eine Carbonsäure-, Carbonsäureanhydrid-, Ester-, Amid- oder Imidgruppe enthalten. Beispielhaft genannt seien Maleinsäure, Maleinsäureanhydrid, Fumarsäure, Acrylsäure, Methacrylsäure, Methylmaleinsäure, Methylmaleinsäureanhydrid, Itakonsäure, Itakonsäureanhydrid, Butenylbernsteinsäure, Butenylbernsteinsäureanhydrid, Tetrahydrophthalsäure, Tetrahydrophthalsäureanhydrid N-Phenylmaleinimid, Zitronensäure, Apfelsäure und 2-Hydroxynonadecan-1,2,3-tricarbonsäure, die Mono- oder Diester der genannten Säuren mit C1- bis C12-Alkoholen wie Methanol oder Ethanol, die Mono- oder Diamide der genannten Säuren, die am Stickstoff ggf. mit Alkyl- oder Arylresten mit bis zu 12 C-Atomen substituiert sein können und die Salze mit Alkali- oder Erdalkalimetallen wie z.B. Calcium und Kalium. Besondere Vorteile bieten Maleinsäure, Fumarsäure, Maleinsäureanhydrid und Zitronensäure. Die Verträglichkeitsvermittler können in einer Menge von 0.05 bis 2 Gewichts-% entweder direkt bei der Blendherstellung zugegeben werden oder der Polyphenylenether und/oder das Polyamid werden in einem separaten Schritt durch die Verträglichkeitsvermittler funktionalisiert.

Die Erfindung betrifft weiterhin die Verwendung der erfindungsgemässen Formmassen zur Herstellung von thermoplastisch verarbeitbaren Formartikeln sowie die aus den erfindungsgemässen Zusammensetzungen erhältlichen Formartikel.

Beispiele derartiger Formartikel schliessen ein: Gehäuse und Funktionsteile für Pumpen, Getriebe, Ventile und Wasserzähler, Drosselklappen, Zylinder, Kolben, Scheinwerfergehäuse, Reflektoren, Kurvenlichtverstellung, Zahnräder, Motor- und Getriebelager, Steckverbindungen, Konnektoren, Profile, Folien oder Schichten von Mehrschichtfolien, Fasern, elektronische Bauteile, Gehäuse für elektronische Bauteile, Werkzeuge, Verbundwerkstoffe, Fluid führende Leitungen und Behälter, insbesondere im Automobilbereich, glatte und gewellte Mono- oder Mehrschichtrohre, Rohrabschnitte, Stutzen, Fittings zum Verbinden von Schläuchen, Wellrohren und medieniührenden Leitungen, Bestandteil von Meluschichtleitungen (Innen-, Aussen- oder Zwischenschicht), einzelne Schichten bei Mehrschichtbehältern, Hydraulikleitungen, Bremsleitungen, Kupplungsleitungen, Kühlflüssigkeitsleitungen, Bremsflüssigkeitsbehälter .

Die Formartikel sind durch die Verfahren Spritzguss, Extrusion oder Blasformen herstellbar.

Die vorliegende Erfindung betrifft weiterhin ein Pulver auf Basis der Copolyamide PA10T/6T, ein schichtweise arbeitendes Verfahren, bei welchem selektiv Bereiche der jeweiligen pulverförmigen Schicht aufgeschmolzen und nach Abkühlen verfestigt werden, sowie Formkörper, hergestellt aus diesem Pulver.

Vorzugsweise werden dabei Pulver mit einer mittleren Korngrösse von 30 bis 200 µm, insbesondere von 50 bis 150 µm eingesetzt, wie man sie beispielsweise durch Mahl- und Fällprozesse erhält. Dabei sind insbesondere solche Verfahren bevorzugt, die zu möglichst sphärischen Teilchen führen, da diese im selektiven Lasersinter-Verfahren (SLS-Verfahren) Vorteile beim schichtweisen Pulverauftrag zeigen.

Bevorzugt werden ungeregelte oder geregelte Copolyamid-Pulver mit einer Lösungsviskosität (0.5 Gew.-% in m-Kresol bei 20°C) im Bereich von 1.3 bis 2.0, insbesondere im Bereich von 1.35 bis 1.85 eingesetzt. Die Regelung erfolgt mittels Mono- und/oder Dicarbonsäuren bzw. Mono- und/oder Diaminen. Die geregelten Copolyamid-Pulver weisen bevorzugt ein Verhältnis der Carboxyl- zu Aminoendgruppen von grösser oder gleich 1:2 bzw. 2:1, insbesondere von grösser oder gleich 1:3 bzw. 3:1 auf, wobei die Konzentration der überwiegenden Carboxyl- oder Aminoendgruppen mindestens 50 mmol/kg, insbesondere mindestens 100 mmol/kg beträgt.

Eine bevorzugte Ausführungsform der Sinter-Pulver ist eine Mischung von entgegengesetzt difunktional geregeltem PA10T/6T. D.h. die Pulver setzen sich aus getrennt amin- und carboxylgeregelten Pulverteilchen zusammen. Dieses Copolyamid-Mischpulver behält bei thermischer Belastung unterhalb des Schmelzpunktes, wie sie beispielsweise beim SLS-Prozess für das nicht-versinterte Pulver auftritt, seine Lösungsviskosität nahezu konstant bei, so dass dieses Mischpulver nur mit geringen Mengen Neupulver oder sogar ohne Zugabe von Neupulver mehrfach im Rapid-Prototyping/Rapid-Manufacturing-Verfahren eingesetzt werden kann. Auf Grund dieser hervorragenden Recycling-Qualitäten ist eine Entsorgung von Rückpulvern häufig nicht mehr notwendig.

Ein Verfahren, welches besonders gut für den Zweck des Rapid Prototyping bzw. Rapid Manufacturing geeignet ist, ist das Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren nach dem Abkühlen wieder zu einer festen Masse. Durch wiederholtes Belichten von immer neu aufgebrachten Schichten können mit diesem Verfahren komplexe dreidimensionale Körper einfach und schnell hergestellt werden. Neben dem Lasersintem gibt es jedoch eine Reihe weiterer geeigneter Verfahren. Die Selektivität der schichtweise arbeitenden Verfahren kann dabei über die Auftragung von Suszeptoren, Absorber, Inhibitoren, Masken, oder über fokussierte Energieeinbringung, wie beispielsweise durch einen Laserstrahl oder durch ein Glasfaserkabel erfolgen.

In der Praxis hat sich beim Laser-Sintern vor allem Polyamid 12-Pulver für die Herstellung von technischen Bauteilen bewährt. Die aus PAl2-Pulver gefertigten Teile genügen zwar häufig den mechanischen Beanspruchungen und kommen damit in ihren Eigenschaften nahe an die späteren Serienteile durch Spritzguss oder Extrusion heran. PA12 hat jedoch einen tiefen Schmelzpunkt von 178°C und eine geringe Steifigkeit von ca. 1300 MPa, die für viele Anwendungen nicht ausreichend ist. Diese Nachteile können durch die erfindungsgemässen Copolyamid-Pulver auf Basis von PA10T/6T überwunden werden, welche einen Schmelzpunkt im Bereich zwischen 270 und 320°C und einen Zug-E-Modul oberhalb von 2500 MPa besitzen.

Das Sinterpulver kann neben dem Copolyamid 10T/6T Partikel zumindest einen weiteren Füllstoff aufweisen. Solche Füllstoffe können z. B. Glas-, Metall- oder Keramikpartikel oder aber auch die bereits oben genannten teilchenförmige Füllstoffe sein. Insbesondere kann das Sinterpulver Voll- oder Hohl-Glaskugeln, Stahlkugeln oder Metallgries als Füllstoffe aufweisen. Typischerweise werden Glaskugeln mit einem mittleren Durchmesser von 20 bis 80 µm verwendet. In einer bevorzugten Ausführungsform sind diese Füllstoffe mit einer dünnen Schicht des erfindungsgemäss eingesetzten Copolyamids ummantelt, wobei die Schichtdicke bevorzugt 2 - 30 µm, insbesondere 5 bis 20 µm beträgt. Die Füllstoffpartikel weisen dabei vorzugsweise eine kleinere oder ungefähr gleich grosse mittlere Partikelgrösse wie die Partikel der Polyamide auf. Vorzugsweise sollte die mittlere Partikelgrösse der Füllstoffe die mittlere Partikelgrösse der Polyamide um nicht mehr als 30%, vorzugsweise um nicht mehr als 20% und ganz besonders bevorzugt um nicht mehr als 10% überschreiten. Die Partikelgrösse ist insbesondere limitiert durch die zulässige Schichtdicke in der jeweiligen Laser-Sinter-Apparatur.

Die erfindungsgemässen Copolyamid-Formmassen lassen sich auch zu temperaturbeständigen Fasern verspinnen, die sich durch eine hohe Festigkeit und eine geringe Wasseraufnahme auszeichnen. Zusammen mit anderen Polymeren sind sogenannte Bikomponentenfasern vom Seite-an-Seite- und Kern-Mantel-Typ herstellbar.

### KURZE ERLÄUTERUNG DER FIGUREN

Die Erfindung soll nachfolgend anhand von Ausführungsbeispielen im Zusammenhang mit den Figuren näher erläutert werden. Es zeigen:
Fig. 1 die Schmelzpunkte von PA 10T/6T; und
Fig. 2 die Wasseraufnahme von PA 10T/6T.

### WEGE ZUR AUSFÜHRUNG DER ERFINDUNG

### Herstellung der Produkte / Herstellverfahren:

Die teilaromatischen Copolyamide (A) PA10T/6T können mit an sich bekannten Verfahren hergestellt werden. Geeignete Verfahren sind an verschiedener Stelle beschrieben worden, und in der Folge sollen einige der möglichen in der Patentliteratur diskutierten Verfahren angegeben werden, :

Die DE 195 13 940 beschreibt ein Verfahren, das die folgenden Stufen umfasst, dieses Verfahren kann zur Herstellung der Komponente (A) verwendet werden:
a) eine Salzbildungsstufe zur Bildung von Salzen aus Diamin(en) und Dicarbonsäure(n) in einer wässrigen 5 bis 50 Gew.-%igen, die Komponenten enthaltenden Lösung und gegebenenfalls partielle Vorreaktion zu niedermolekularen Oligoamiden bei Temperaturen von 120°C bis 220°C und unter Drücken von bis zu 23 bar,
b) gegebenenfalls Überführung der Lösung aus Stufe a) in ein zweites Reaktionsgefäss bzw. einen Rührautoklaven unter den am Ende ihrer Herstellung herrschenden Bedingungen,
c) die Reaktionsphase, während der die Umsetzung zu den Vorkondensaten unter Aufheizen des Reaktorinhalts auf eine vorgegebene Temperatur und kontrolliertem Einstellen des Wasserdampfpartialdruckes auf den vorgegebenen Wert, der durch kontrolliertes Ablassen von Wasserdampf oder gegebenenfalls kontrollierte Einspeisung von Wasserdampf aus einem mit dem Autoklaven verbundenen Wasserdampferzeuger aufrechterhalten wird, vorangetrieben wird,
d) eine für mindestens 10 Minuten aufrechtzuerhaltende stationäre Phase, bei der die Temperatur des Reaktorinhalts und der Wasserdampfpartialdruck - letzterer unter Anwendung der unter c) aufgeführten Massnahmen - kontrolliert jeweils auf die Werte eingestellt werden, welche für die Überführung der Vorkondensate in die nachfolgende Prozess-Stufe vorgesehen sind,
   obiges mit der Massgabe, dass im Falle von Vorkondensaten teilkristalliner Polyamide oder Copolyamide mit einem Schmelzpunkt von mehr als 280°C (Schmelzpunkt-Maximum, gemessen mittels Differential Scanning Colorimetry) die Temperatur des Reaktorinhalts während dieser Phase d) und der Phase c) 265°C nicht überschreiten darf und dass für die besagten teilkristallinen Polyamide oder Copolyamide während der Phasen d) und c) die beschriebenen Randbedingungen in Bezug auf die Abhängigkeit des mindestens anzuwendenden Wasserdampfpartialdruckes von der Temperatur des Reaktorinhalts und der Amidgruppenkonzentration des Polymeren einzuhalten sind.
e) eine Austragsphase, während der die Vorkondensate unter Konstanthalten der am Ende der Phase d) herrschenden Temperatur und Aufrechterhaltung mindestens des zu diesem Zeitpunkt herrschenden Wasserdampfpartialdrucks durch Einspeisen von Wasserdampf aus besagtem Wasserdampferzeuger in den Autoklaven und alle damit verbundenen Austragsleitungen/-aggregate entweder im schmelzeflüssigen Zustand über eine Puffereinrichtung direkt oder über eine Abscheidevorrichtung und Durchlaufen des festen Zustandes, mit nachfolgend wahlweisem Trocknen und/oder Zerkleinern und gegebenenfalls weiterer Verfahrensstufen einer Endreaktionsvorrichtung zugeführt werden können.

In der EP 0 976 774 ist ein Verfahren zur Herstellung von Polyamiden beschrieben, das die folgenden Schritte in der angegebenen Reihenfolge umfasst, und welches ebenfalls zur Herstellung des Copolyamids der Komponente (A) verwendet werden kann, wenn die entsprechenden Bestandteile erfindungsgemäss ersetzt werden:
(i) ein Schritt, in dem eine Dicarbonsäurekomponente mit einem Terephthalsäuregehalt und eine Diaminkomponente, in Gegenwart von 15 bis 35 Gew.-% Wasser bei einer Reaktionstemperatur zwischen 250°C und 280°C und bei einem Reaktionsdruck (P), der der folgenden Formel genügt P₀ ≥ P ≥ 0,7 P₀, wobei P₀ für den gesättigten Dampfdruck von Wasser bei der Reaktionstemperatur steht, polykondensiert werden, um ein primäres Polykondensat zu bilden;
(ii) ein Schritt, in dem das resultierende, wie in dem vorstehenden Schritt (i) gebildete Polykondensat aus dem Reaktor in eine atmosphärische Umgebung genommen wird, während es eine Temperatur in dem Bereich zwischen 250°C und 280°C und einen Wassergehalt im Bereich von 15 bis 35 Gew.-% aufweist;
(iii) ein Schritt, in dem das so aus dem vorstehenden Schritt (ii) entnommene primäre Polykondensat einer Festphasenpolymerisation oder Schmelzpolymerisation unterzogen wird, um ein Polyamid mit einem erhöhten Molekulargewicht zu ergeben.

Die EP 0 129 195, EP 0 129 196 und die EP 0 299 444 beschreiben Verfahren zur kontinuierlichen Herstellung von Polyamiden, die in angepasster Weise auch zur Herstellung der Komponente (A) geeignet sind, bei denen zunächst 30 bis 70%ige wässrige Lösungen von Salzen aus Dicarbonsäuren und Diaminen unter erhöhtem Druck von 1 bis 10 bar unter gleichzeitiger Verdampfung von Wasser innerhalb einer Verweilzeit von weniger als 60 Sekunden auf eine Temperatur von 250-300°C erhitzt, anschliessend Präpolymere und Dämpfe kontinuierlich getrennt, die Dämpfe rektifiziert und die mitgeführten Diamine zurückgeleitet werden. Schliesslich wird das Präpolymer in eine Polykondensationszone geleitet und unter einem Überdruck von 1-10 bar und einer Temperatur von 250-300°C polykondensiert. Bei Austritt aus der Verdampferzone beträgt der Umsetzungsgrad vorteilhaft mindestens 93% und der Wassergehalt des Präpolymeren höchstens 7 Gew.-%. Durch diese kurzen Verweilzeiten wird die Bildung von Diaminen weitgehend verhindert.

Die US 4,831,108 beschreibt ein Polykondensationsverfahren zur Herstellung von Polyamiden, Polyamidimiden, Polyestern und Polyarylaten, welches ebenfalls in angepasster Weise für die Herstellung der Komponente (A) verwendet werden kann, welches dadurch gekennzeichnet ist, dass zuerst eine erhitzte Lösung eines Salzes oder eines Präpolymers oder eines Gemisches aus einem Salz und einem Präpolymer gebildet wird, die praktisch homogen ist, eine einzelne Phase darstellt und bei der gewählten Polykondensationstemperatur stabil ist und leicht atomisiert, worauf diese Lösung unter Bildung eines Aerosolnebels in einen Verdampfungsreaktor, der bei einem Druck von etwa 0 bis 2,76 MPa (0 bis 400 psig) betrieben wird, zwecks Kondensation und Polymerisation eingespeist wird, wobei dieser Verdampfungsreaktor auf einem hohen Wärmestrom mit Wandtemperaturen von etwa 204 bis 538°C (400 bis 1000°F) und Schmelztemperaturen von etwa 177 bis 399°C (350 bis 750°F) ausgelegt ist, und wobei das erhaltene Polymer etwa 0,1 bis etwa 20 Sekunden im Reaktor gehalten wird,

In US 4,607,073 wird gezeigt, dass teilaromatische Polyamide auch aus Terephthaloylchlorid oder Dimethylterephthalat mit den entsprechenden Diaminen hergestellt werden können. Polyamid wird durch Vorkondensation des trockenen Salzes bei 310°C unter Stickstoff bei Atmosphärendruck und anschliessender 12 stündiger Festphasennachkondensation bei 295°C hergestellt. Ein derartiges Verfahren ist auch zur Herstellung der Komponente (A) nach entsprechender Anpassung möglich.

Bei der Herstellung der Polyamide aus den Dicarbonsäureestern ist es gemäss DE 14 95 393 und US 3,454,536 bevorzugt, die Ausgangskomponenten zunächst in Gegenwart von Wasser auf 90°C bis 100°C zu erhitzen und das entstehende Methanol praktisch vollständig abzudestillieren und anschliessend den Destillationsrückstand entweder unter Überdruck mit nachfolgender Entspannung oder durchwegs unter Normaldruck bei Temperaturen zwischen 250 und 290°C zu polykondensieren. Ein solches Verfahren kann auch zur Herstellung der Komponente (A) verwendet werden.

Am gebräuchlichsten, und zur Herstellung der Komponente (A) geeignet, zur Herstellung von Polyamiden mit hohen Schmelzpunkten ist die zweistufige Herstellung zuerst eines tiefviskosen, niedermolekularen Vorkondensats und anschliessender Nachkondensation in der Festphase oder der Schmelze (z.B. im Extruder). Es ist auch ein dreistufiges Verfahren aus 1. Vorkondensation, 2. Festphasenpolymerisation und 3. Schmelzepolymerisation möglich, wie es in DE 696 30 260 angegeben ist.

Für Produkte mit Schmelzpunkten unter 300°C eignet sich auch das beispielsweise in US 3,843,611 und US 3,839,296 beschriebene einstufige Batchverfahren, bei dem die Mischung der Monomeren oder deren Salze für 1 bis 16 Stunden auf Temperaturen von 250 bis 320°C aufgeheizt werden und der Druck von einem Maximum unter Abdampfen von gasförmigen Material gegebenenfalls mit Hilfe eines Inertgases auf den niedrigsten Druck von bis zu 1 mm Hg reduziert wird.

In der Folge sollen spezifische Beispiele angegeben, mit Vergleichsbeispielen (VB) verglichen und diskutiert werden. Die Lagerung in Wasser zur Bestimmung der entsprechenden Parameter erfolgte dabei bei 95°C für eine Dauer von 240 Stunden.

Die Messungen wurden nach folgenden Normen und an folgenden Prüfkörpern durchgeführt.

### Zug-E-Modul:

ISO 527 mit einer Zuggeschwindigkeit von 50 mm/min (unverstärkte Varianten) oder einer Zuggeschwindigkeit von 5 mm/min (verstärkte Varianten)

ISO-Zugstab, Norm: ISO/CD 3167, Typ A1, 170 x 20/10 x 4 mm, Temperatur 23 °C

Die Quersteifigkeit wurde an einem BIAX-Probekörper (BIAX, publiziert in Noss'Ovra Personalzeitschrift, Dezember 2006, Nr. 12, 29. Jahrgang, EMS-CHEMIE AG) bestimmt, der die richtungsabhängige Messung der Steifigkeit und Festigkeit erlaubt.

### Maximale Zugfestigkeit, Reissfestigkeit und Querfestigkeit:

ISO 527 mit einer Zuggeschwindigkeit von 50 mm/min (unverstärkte Varianten) oder einer Zuggeschwindigkeit von 5 mm/min (verstärkte Varianten)

ISO-Zugstab , Norm: ISO/CD 3167, Typ A1, 170 x 20/10 x 4 mm, Temperatur 23 °C

Die Querfestigkeit (Reissfestigkeit quer) wurde an einem BIAX-Probekörper (BIAX, publiziert in Noss'Ovra Personalzeitschrift, Dezember 2006, Nr. 12, 29. Jahrgang, EMS-CHEMIE AG) bestimmt, der die richtungsabhängige Messung der Steifigkeit und Festigkeit erlaubt.

### Thermisches Verhalten:

Schmelzpunkt, Schmelzenthalpie und Glasumwandlungstemperatur (Tg):

ISO-Norm 11357-11-2

Granulat

Die Differential Scanning Calorimetry (DSC) wurde mit Aufheizrate von 20 °C/min durchgeführt. Für die Glasumwandlungstemperatur (Tg) wird die Temperatur für den Onset angegeben.

### Relative Viskosität:

DIN EN ISO 307, in 0,5 Gew.-%-iger m-Kresollösung, Temperatur 20 °C Granulat

### HDT A (1,8 MPa) HDT B (0.45 MPa) und HDT C (8 MPa):

ISO 75

ISO-Schlagstab 80x10x4

### Rohrprüfungen:

Kälteschlag, Bruchspannung, Bruchdehnung:

VW TL 52435

Der Kälteschlagtest wurde bei -40°C mit 500g und der Zugversuch längs bei 23°C, 50% Feuchte mit 100 mm/min an 8x1 mm Rohren durchgeführt.

### Berstdruck

DIN 73378

8x1 mm Rohr

### Beispiele 1-7 (B1-B7) und Vergleichsbeispiele 1, 2, 7, 8 (VB1, VB2, VB7, VB8), VK

Diamin(e), Terephthalsäure, Katalysator, Regler und Wasser werden in einen 201-Autoklaven gegeben, innerhalb der Aufheizzeit auf die Produkttemperatur aufgeheizt, für die Druckphasenzeit auf dem vorgegebenen Druck gehalten und anschliessend über eine Düse ausgetragen. Das Vorkondensat wird 24 Stunden bei 120°C und einem Vakuum von 30 mbar getrocknet.

### Beispiele 1-7 (B1-B7) und Vergleichsbeispiele 1-4, 7, 8 (VB1-VB4, VB7, VB8), NK

Das Vorkondensat aus dem Beispiel VK wird in einem zweiwelligen Extruder der Firma Werner und Pfleiderer mit einem Schneckendurchmesser von 25 mm bei vorgegebenen Prozessparametern (Zylindertemperatur, Schneckendrehzahl, Durchsatz) nachkondensiert. Die Schmelze wird in Zone 10 durch einen Stickstoffstrom entgast.

Das Produkt wird als Strang aus einer Düse mit 3 mm Durchmesser abgezogen und granuliert. Das Granulat wird 24 Stunden bei 120°C im Vakuum von 30 mbar getrocknet.

### Beispiele 1-15 (B1-B15) und Vergleichsbeispiele 1-12 (VB1-VB12), SPG

Das Nachkondensat aus dem Beispiel NK und dem Vergleichsbeispiel NK bzw. das Compound (B11-B15, VB9-VB12) wird mit einer Spritzgussmaschine Arburg Allrounder 320-210-750 zu ISO-Zugstäben bei definierten Zylindertemperturen der Zonen 1 bis 4 und einer definierten Werkzeugtemperatur verspritzt.

**Tabelle 1: Einwaagen, Prozessbedingungen und Eigenschaften der Beispiele B1-B4 VK, NK und SPG**

| | | **PA10T/6T** | **PA10T/6T** | **PA10T/6T** | **PA10T/6T** |
|---|---|---|---|---|---|
| | **Mol-%** | **44.9/55.1** | **49.9/50.1** | **55.0/45.0** | **65.5/34.5** |
| *Vorkondensat (VK)* | | **B1-VK** | **B2-VK** | **B3-VK** | **B4-VK** |
| 1,6-Hexandiamin | g | 1323 | 1599 | 1061 | 797 |
| 1,10-Decandiamin | g | 1597 | 2359 | 1920 | 2246 |
| Terephthalsäure | g | 3363 | 4428 | 3302 | 3240 |
| hypophosphorige Säure (50% ig) | g | 8 | 11 | 8 | 8 |
| Benzoesäure | g | 32 | | 32 | 32 |
| Wasser | g | 5175 | 3600 | 5175 | 5175 |
| Aufheizzeit | min | 68 | 55 | 65 | 78 |
| Produkttemperatur | °C | 260 | 260 | 260 | 260 |
| Druckphasenzeit | min | 60 | 60 | 60 | 60 |
| Druck | bar | 32 | 32 | 32 | 32 |

| *Nachkondensat (NK)* | | **B1-NK** | **B2-NK** | **B3-NK** | **B4-NK** |
|---|---|---|---|---|---|
| Zylindertemperatur | °C | 330 | 340 | 320 | 320 |
| Schneckendrehzahl | UPM | 150 | 150 | 150 | 150 |
| Durchsatz | kg/h | 4 | 5 | 4 | 4 |
| Relative Viskosität | | 1.598 | 2.162 | 1.553 | 1.576 |
| COOH | µeq/g | 163 | 182 | 164 | 165 |
| NH2 | µeq/g | 28 | 49 | 37 | 43 |
| Schmelzpunkt | °C | 307 | 295 | 294 | 279 |
| Schmelzenthalpie | J/g | 44 | 37 | 32 | 39 |
| Glasübergangstemperatur | °C | 125 | 126 | 124 | 121 |

| *Spritzgussprüfkörper (SPG)* | | **B1-SPG** | **B2-SPG** | **B3-SPG** | **B4-SPG** |
|---|---|---|---|---|---|
| Zylindertemperaturen Zone 1 | °C | 315 | 315 | 315 | 315 |
| Zylindertemperaturen Zone 2 | °C | 320 | 320 | 320 | 320 |
| Zylindertemperaturen Zone 3 | °C | 325 | 325 | 325 | 325 |
| Zylindertemperaturen Zone 4 | °C | 330 | 335 | 330 | 330 |
| Werkzeugtemperatur | °C | 110 | 90 | 110 | 110 |
| Wasseraufnahme | Gew.-% | 3.3 | 3.6 | 3.2 | 3.0 |
| Zug-E-Modul, trocken | MPa | 2800 | 2700 | 2550 | 2500 |
| Zug-E-Modul, wassergesättigt | MPa | 3150 | 3000 | 3000 | 2850 |
| Modulverhältnis | | 1.13 | 1.11 | 1.18 | 1.14 |
| Maximale Zugfestigkeit, trocken | MPa | 85 | 106 | 90 | 87 |
| Maximale Zugfestigkeit, wassergesättigt | MPa | 84 | 90 | 80 | 77 |
| Festigkeitsverhältnis | | 0.99 | 0.85 | 0.89 | 0.89 |

**Tabelle 2: Einwaagen, Prozessbedingungen und Eigenschaften der Beispiele B5-B7 VK, NK und SPG**

| | | **PA10T/6T** | **PA10T/6T** | **PA10T/6T** |
|---|---|---|---|---|
| | **Mol/%** | **76.5/23.5** | **82.2/17.8** | **88.0/12.0** |
| *Vorkondensat (VK)* | | **B5-VK** | **B6-VK** | **B7-VK** |
| 1,6-Hexandiamin | g | 533 | 536 | 266 |
| 1,10-Decandiamin | g | 2572 | 3670 | 2901 |
| Terephthalsäure | g | 3178 | 4180 | 3115 |
| hypophosphorige Säure (50% ig) | g | 8 | 11 | 8 |
| Benzoesäure | g | 32 | | 32 |
| Wasser | g | 5175 | 3600 | 5175 |
| Aufheizzeit | min | 70 | 52 | 67 |
| Produkttemperatur | °C | 260 | 260 | 260 |
| Druckphasenzeit | min | 60 | 60 | 60 |
| Druck | bar | 32 | 32 | 32 |

| *Nachkondensat (NK)* | | **B5-NK** | **B6-NK** | **B7-NK** |
|---|---|---|---|---|
| Zylindertemperatur | °C | 320 | 330 | 320 |
| Schneckendrehzahl | UPM | 150 | 150 | 150 |
| Durchsatz | kg/h | 4 | 5 | 4 |
| Relative Viskosität | | 1.637 | 2.148 | - |
| COOH | µeq/g | 214 | 50 | 111 |
| NH2 | µeq/g | 51 | 47 | 43 |
| Schmelzpunkt | °C | 291 | 295 | 307 |
| Schmelzenthalpie | J/g | 38 | 41 | 46 |
| Glasübergangstemperatur | °C | 124 | 122 | 118 |

| *Spritzgussprüfkörper (SPG)* | | **B5-SPG** | **B6-SPG** | **B7-SPG** |
|---|---|---|---|---|
| Zylindertemperaturen Zone 1 | °C | 315 | 335 | 315 |
| Zylindertemperaturen Zone 2 | °C | 320 | 340 | 320 |
| Zylindertemperaturen Zone 3 | °C | 325 | 345 | 325 |
| Zylindertemperaturen Zone 4 | °C | 330 | 350 | 330 |
| Werkzeugtemperatur | °C | 110 | 90 | 110 |
| Wasseraufnahme | Gew.-% | 2.8 | 2.8 | 2.4 |
| Zug-E-Modul, trocken | MPa | 2600 | 2850 | 2700 |
| Zug-E-Modul, wassergesättigt | MPa | 2950 | 3100 | 3000 |
| Modulverhältnis | | 1.13 | 1.09 | 1.11 |
| Maximale Zugfestigkeit, trocken | MPa | 88 | 104 | 89 |
| Maximale Zugfestigkeit, wassergesättigt | MPa | 79 | 97 | 81 |
| Festigkeitsverhältnis | | 0.90 | 0.93 | 0.91 |

**Tabelle 3: Einwaagen, Prozessbedingungen und Eigenschaften der Vergleichsbeispiele VB1-VB4 VK, NK und SPG**

| | | **PA10T/6T** | **PA10T** | **PA6T/6I** | **PA6T/66** |
|---|---|---|---|---|---|
| | **Mol%** | **35.2/64.8** | **100** | **70/30** | **55/45** |
| *Vorkondensat (VK)* | | **VB1-VK** | **VB2-VK** | | |
| 1,6-Hexandiamin | g | 1584 | | | |
| 1,10-Decandiamin | g | 1275 | 3230 | | |
| Terephthalsäure | g | 3424 | 3053 | | |
| hypophosphorige Säure (50% ig) | g | 8 | 8 | | |
| Benzoesäure | g | 32 | 32 | | |
| Wasser | g | 5175 | 5175 | | |
| Aufheizzeit | min | 67 | 50 | | |
| Produkttemperatur | °C | 260 | 260 | | |
| Druckphasenzeit | min | 45 | 60 | | |
| Druck | bar | 32 | 32 | | |

| *Nachkondensat (NK)* | | **VB1-NK** | **VB2-NK** | **VB3-NK** | **VB4-NK** |
|---|---|---|---|---|---|
| Zylindertemperatur | °C | 330 | 330 | 350 | 340 |
| Schneckendrehzahl | UPM | 150 | 150 | 150 | 150 |
| Durchsatz | kg/h | 4 | 4 | 7 | 7 |
| Relative Viskosität | | 1.428 | 1.842 | 1.556 | 1.729 |
| COOH | µeq/g | 367 | - | 186 | 129 |
| NH2 | µeq/g | 20 | 42 | 69 | 85 |
| Schmelzpunkt | °C | 320 | 314 | 320 | 310 |
| Schmelzenthalpie | J/g | 44 | 46 | 40 | 45 |
| Glasübergangstemperatur | °C | 126 | 116 | 134 | 95 |

| *Spritzgussprüfkörper (SPG)* | | **VB1-SPG** | **VB2-SPG** | **VB3-SPG** | **VB4-SPG** |
|---|---|---|---|---|---|
| Zylindertemperaturen Zone 1 | °C | 325 | 330 | 325 | 315 |
| Zylindertemperaturen Zone 2 | °C | 330 | 335 | 330 | 320 |
| Zylindertemperaturen Zone 3 | °C | 335 | 340 | 335 | 325 |
| Zylindertemperaturen Zone 4 | °C | 340 | 355 | 340 | 330 |
| Werkzeugtemperatur | °C | 110 | 110 | 130 | 130 |
| Wasseraufnahme | Gew.-% | 3.2 | 2.1 | 5.0 | 6.5 |
| Zug-E-Modul, trocken | MPa | 3050 | 2700 | 3850 | 3500 |
| Zug-E-Modul, wassergesättigt | MPa | 3450 | 2950 | 4500 | 1050 |
| Modulverhältnis | | 1.13 | 1.09 | 1.17 | 0.30 |
| Maximale Zugfestigkeit, trocken | MPa | 48 | 91 | 81 | 93 |
| Maximale Zugfestigkeit, wassergesättigt | MPa | 48 | 85 | 64 | 48 |
| Festigkeitsverhältnis | | 1.00 | 0.93 | 0.79 | 0.52 |

In Vergleichsbeispiel VB3-NK bzw. VB4-NK wurde ein Vorkondensat PA6T/6I mit einer Lösungsviskosität von ηᵣₑₗ = 1.14 bzw. ein Vorkondensat PA6T/66 mit einer Lösungsviskosität von ηᵣₑₗ =1.17 eingesetzt.

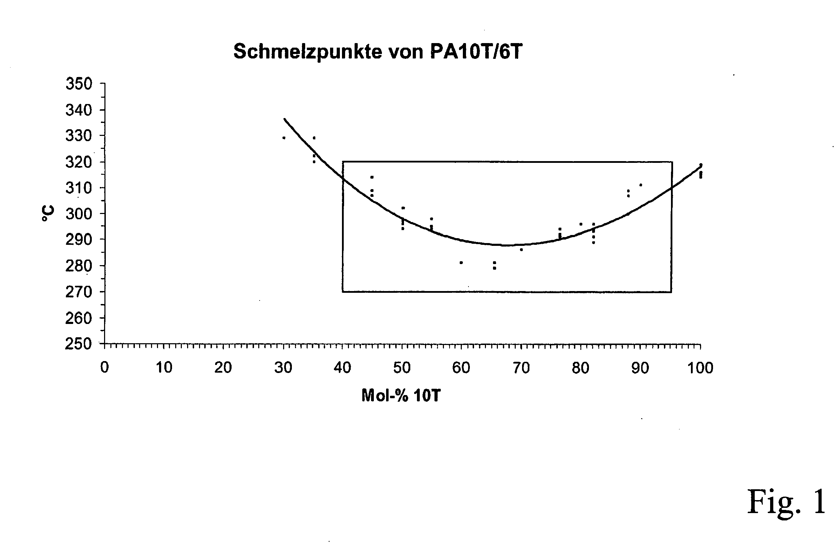

Wie aus der grafischen Darstellung der oben angegebenen Resultate gemäss Fig. 1 ersichtlich wird, ergeben sich ideale Schmelzpunkte für die erfindungsgemäss beanspruchten Verhältnisse von 1,10-Decandiamin und 1,6-Hexandiamin, wobei ein Minimum im Bereich von 60-70 Mol-% 10T beobachtet wird.

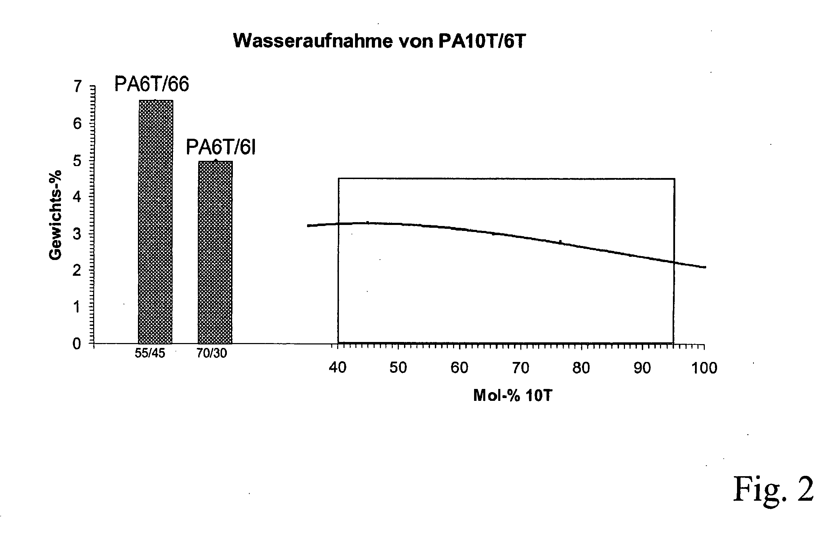

Wie aus der weiterhin angegebenen grafischen Darstellung der oben angegebenen Resultate gemäss Fig. 2 ersichtlich wird, ist die Wasseraufnahme im Falle der Systeme gemäss Vergleichsbeispielen durchwegs wesentlich grösser als bei den erfindungsgemäss vorgeschlagenen Polyamid-Formmassen. Des weiteren kann erkannt werden, dass für zunehmende 10T Anteile eine Abnahme der Wasseraufnahme beobachtet werden kann. Da Schmelzpunkt und Wasseraufnahme beide als Parameter berücksichtigt werden müssen, ergeben sich die erfindungsgemäss beanspruchten optimalen Bereiche.

**Tabelle 4: Einwaagen, Prozessbedingungen und Eigenschaften der Beispiele VB5-VB8 VK, NK und SPG**

| | | **PA66** | **PA12** | **PA6T/610** | **PA6T/612** |
|---|---|---|---|---|---|
| | **Mol-%** | **100** | **100** | **66/34** | **67/33** |
| *Vorkondensat (VK)* | | | | **VB7-VK** | **VB8-VK** |
| 1,6-Hexandiamin | g | | | 2400 | 2400 |
| Terephthalsäure | g | | | 2203 | 2171 |
| Sebazinsäure | g | | | 1382 | |
| Dodecandisäure | g | | | | 1482 |
| Na-Hypophosphit | g | | | 6 | 6 |
| Benzoesäure | g | | | 13 | 13 |
| Wasser | g | | | 2600 | 2600 |
| Aufheizzeit | min | | | 54 | 55 |
| Produkttemperatur | °C | | | 260 | 260 |
| Druckphasenzeit | min | | | 90 | 90 |
| Druck | bar | | | 32 | 32 |

| *Nachkondensat (NK)* | | **VB5-NK** | **VB6-NK** | **VB7-NK** | **VB8-NK** |
|---|---|---|---|---|---|
| Zylindertemperatur | °C | | | 370 | 370 |
| Schneckendrehzahl | UPM | | | 150 | 150 |
| Durchsatz | kg/h | | | 4 | 4 |
| Relative Viskosität | | 1.94 | 2.19 | 1.149 | 1.156 |
| COOH | µ eq/g | 104 | 5 | 50 | 40 |
| NH2 | µ eq/g | 55 | 39 | 85 | 76 |
| Schmelzpunkt | °C | 261 | 178 | 312 | 314 |
| Schmelzenthalpie | L/g | 49 | 49 | 45 | 41 |
| Glasübergangstemperatur | °C | 54 | 20 | 99 | 96 |

| *Spritzgussprüfkörper (SPG)* | | **VB5-SPG** | **VB6-SPG** | **VB7-SPG** | **VB8-SPG** |
|---|---|---|---|---|---|
| Zylindertemperaturen Zone 1 | °C | 265 | 315 | 325 | 325 |
| Zylindertemperaturen Zone 2 | °C | 270 | 320 | 330 | 330 |
| Zylindertemperaturen Zone 3 | °C | 275 | 325 | 335 | 335 |
| Zylindertemperaturen Zone 4 | °C | 280 | 330 | 340 | 340 |
| Werkzeugtemperatur | °C | 80 | 115 | 120 | 120 |
| Wasseraufnahme | Gew.-% | 7.6 | 2.3 | 5.2 | 4.5 |
| Zug-E-Modul, trocken | MPa | 3400 | 1500 | 3000 | 2900 |
| Zug-E-Modul, wassergesättigt | MPa | 850 | 1000 | 2500 | 2500 |
| Modulverhältnis | | 0.25 | 0.67 | 0.83 | 0.86 |
| Maximale Zugfestigkeit, trocken | MPa | 91 | 50 | 99 | 91 |
| Maximale Zugfestigkeit, wassergesättigt | MPa | 49 | 47 | 62 | 62 |
| Festigkeitsverhältnis | | 0.54 | 0.94 | 0.63 | 0.68 |

Die Vergleichsbeispiele VB5 und VB6 beruhen auf den kommerziell erhältlichen, hochmolekularen Polymeren Polyamid-12 (ηᵣₑₗ = 2.19, EMS-CHEMIE AG, Schweiz) und Polyamid-66 (ηᵣₑₗ = 1,94, RADICI, Italien).

Die Vergleichsbeispiele VB7 und VB8 zeigen, dass sich mit einer Kombination von Terephthalsäure mit langkettigen Dicarbonsäuren zwar auch die Wasseraufnahme reduzieren lässt, die Modul- und Festigkeitsverhältnisse aber unter denen der PA10T/6T-Copolyamide liegen.

### Beispiele 8-10 (B8-B10), VK

Diamin(e), Terephthalsäure, Katalysator, Regler und Wasser werden in einen Löser gegeben, auf 180°C aufgeheizt und nach der Homogenisierung der Monomermischung in ein Vorratsgefäss abgelassen. Die Salzlösung wird kontinuierlich in zwei Wärmetauschern auf 258°C erhitzt und in einem Rohrreaktor bei einem Druck von 34 bar gehalten und anschliessend über eine Düse ausgetragen. Das Vorkondensat wird 24 Stunden bei 120°C und einem Vakuum von 30 mbar getrocknet.

### Beispiele 8-10 (B8-B10), NK

Das Vorkondensat wird wie in den Beispielen 1-7 bei den in Tabelle 5 aufgeführten Bedingungen nachkondensiert.

**Tabelle 5: Einwaagen, Prozessbedingungen und Eigenschaften der Beispiele B8-B10 VK und NK**

| | | **PA10T/6T** | **PA10T/6T** | **PA10T/6T** |
|---|---|---|---|---|
| | **Mol-%** | **49.9/50.1** | **71.0/29.0** | **82.2/17.8** |
| *Vorkondensat (VK)* | | **B8-VK** | **B9-VK** | **B10-VK** |
| 1,6-Hexandiamin | g | 29575 | 16485 | 9910 |
| 1,10-Decandiamin | g | 43630 | 59834 | 67816 |
| Terephthalsäure | g | 79567 | 76652 | 75045 |
| hypophosphorige Säure (50% ig) | g | 197 | 197 | 197 |
| Benzoesäure | g | 970 | 770 | 970 |
| Wasser | g | 66000 | 66000 | 66000 |

| *Nachkondensat (NK)* | | **B8-NK** | **B9-NK** | **B10-NK** |
|---|---|---|---|---|
| Zylindertemperatur | °C | 330 | 320 | 320 |
| Schneckendrehzahl | UPM | 150 | 200 | 200 |
| Durchsatz | kg/h | 4 | 4 | 4 |
| Relative Viskosität | | 1.77 | 1.81 | 1.68 |
| COOH | µeq/g | 34 | 46 | 34 |
| NH2 | µeq/g | 133 | 155 | 141 |
| Schmelzpunkt | °C | 301 | 282 | 294 |
| Schmelzenthalpie | J/g | 50 | 48 | 60 |
| Glasübergangstemperatur | °C | 123 | 118 | 115 |

### Beispiele 11-15 (B11-B15) und Vergleichsbeispiele 10, 11(VB10, VB11)

Das Nachkondensat aus den Beispielen B8 - B10 NK wird in einem zweiwelligen Extruder der Firma Werner und Pfleiderer mit einem Schneckendurchmesser von 25 mm bei vorgegebenen Prozessparametern (Zylindertemperatur, Schneckendrehzahl, Durchsatz) compoundiert. Das Produkt wird als Strang aus einer Düse mit 3 mm Durchmesser abgezogen und granuliert. Das Granulat wird 24 Stunden bei 120°C getrocknet.

**Tabelle 6: Zusammensetzung und Eigenschaften der glasfaserverstärkten Compounds des Beispiels B11 und des Vergleichsbeispiels VB9**

| | | **PA10T/6T** | **Grivory** |
|---|---|---|---|
| | **Mol-%** | **49.9/50.1** | **HIV-5H1** |
| *Compound* | | **B11** | **VB9** |
| B8-NK | Gew.-% | 50.0 | |
| Glasfasern | Gew.-% | 50.0 | |
| Zylindertemperatur | °C | 330 | |
| Schneckendrehzahl | UPM | 150 | |
| Durchsatz | kg/h | 8 | |

| *Spritzgussprüfkörper (SPG)* | | **B11-SPG** | **VB9-SPG** |
|---|---|---|---|
| Zylindertemperaturen Zone 1 | °C | 325 | 325 |
| Zylindertemperaturen Zone 2 | °C | 330 | 330 |
| Zylindertemperaturen Zone 3 | °C | 335 | 335 |
| Zylindertemperaturen Zone 4 | °C | 340 | 340 |
| Werkzeugtemperatur | °C | 120 | 120 |
| Wasseraufnahme | Gew.-% | 1.60 | 2.31 |
| Zug-E-Modul, trocken | MPa | 15800 | 18500 |
| Zug-E-Modul, wassergesättigt | MPa | 15800 | 18600 |
| Modulverhältnis | | 1.00 | 1.01 |
| Maximale Zugfestigkeit, trocken | MPa | 219 | 263 |
| Maximale Zugfestigkeit, wassergesättigt | MPa | 192 | 221 |
| Festigkeitsverhältnis | | 0.88 | 0.84 |
| HDT A (1.8 MPa) | °C | 274 | >280 |
| HDT C (8 MPa) | °C | 219 | 221 |

Grivory HTV-5H1 ist ein mit 50% Glasfasern verstärktes PA6T/6I 70/30 Mol-% der EMS-CHEMIE AG, Schweiz.

In Beispiel 11 (B11) wurden Glasfasern mit einer Länge von 4,5 mm und einem Durchmesser von 10 µm (Glasfaser CS 7928, BAYER AG, Deutschland) verwendet.

**Tabelle 7: Zusammensetzung und Eigenschaften der hybridverstärkten Compounds der Beispiele B12-B13 und der Vergleichsbeispiele VB10 und VB11.**

| | | **PA10T/6T** | **PA10T/6T** | **PA6T/6I** | **PA10T** |
|---|---|---|---|---|---|
| | **Mol-%** | **49.9/50.1** | **82.2/17.8** | **70/30** | **100** |
| *Compound* | | **B12** | **B13** | **VB10** | **VB11** |
| B8-NK | Gew.-% | 43.8 | | | |
| B10-NK | Gew.-% | | 43.8 | | |
| PA6T/6I 70/30 - NK | Gew.-% | | | 43.8 | |
| VB2-NK | Gew.-% | | | | 43.8 |
| Glasfasern | Gew.-% | 35.0 | 35.0 | 35.0 | 35.0 |
| Millicarb (CaCO3) | Gew.-% | 20.0 | 20.0 | 20.0 | 20.0 |
| Russ-Masterbatch | Gew.-% | 1.2 | 1.2 | 1.2 | 1.2 |
| Zylindertemperatur | °C | 320 | 320 | 340 | 315 |
| Schneckendrehzahl | UPM | 150 | 150 | 150 | 150 |
| Durchsatz | kg/h | 10 | 10 | 10 | 10 |

| *Spritzgussprüfkörper (SPG)* | | **B12-SPG** | **B13-SPG** | **VB10-SPG** | **VB11-SPG** |
|---|---|---|---|---|---|
| Zylindertemperaturen Zone 1 | °C | 315 | 315 | 335 | 315 |
| Zylindertemperaturen Zone 2 | °C | 320 | 320 | 340 | 320 |
| Zylindertemperaturen Zone 3 | °C | 325 | 325 | 345 | 325 |
| Zylindertemperaturen Zone 4 | °C | 340 | 340 | 350 | 340 |
| Werkzeugtemperatur | °C | 150 | 150 | 150 | 150 |
| Zug-E-Modul, trocken | MPa | 14100 | 14500 | 16600 | 16300 |
| Maximale Zugfestigkeit, trocken | MPa | 179 | 183 | 196 | 167 |
| Reissdehnung, trocken | % | 1.8 | 1.9 | 1.6 | 1.7 |
| Oberflächenqualität | | gut | gut | sehr gut | schlecht |
| HDT A (1.8 MPa) | °C | 267 | 269 | 277 | |
| HDT C (8 MPa) | °C | 180 | 207 | 163 | |

Wenn reines PA10T für die hybridverstärkten Compounds eingesetzt wird, ist die Spritzgussverarbeitung sehr schwierig, weil die Spritzgussdüse wegen der hohen Kristallisationsgeschwindigkeit einfriert. Die Oberflächenqualität von 10 x 10 cm Platten ist wegen der hohen Kristallinität schlecht, während die der PA10T/6T-Copolyamide wesentlich besser ist.

**Tabelle 8: Zusammensetzung und Eigenschaften der schlagzähmodifizierten Compounds der Beispiele B14-B15 und des Vergleichsbeispiels VB12.**

| | | **PA10T/6T** | **PA10T/6T** | **Grilamid** |
|---|---|---|---|---|
| | **Mol-%** | **71.0/29.0** | **82.2/17.8** | **XE 3835** |
| *Compound* | | **B14** | **B15** | **VB12** |
| B9-NK | Gew.-% | 77.5 | | |
| B10-NK | Gew.-% | | 77.5 | |
| Tafmer MH7020 | Gew.-% | 22.5 | 22.5 | |
| Zylindertemperatur | °C | 300 | 320 | |
| Schneckendrehzahl | UPM | 200 | 200 | |
| Durchsatz | kg/h | 10 | 10 | |

| *Spritzgussprüfkörper (SPG)* | | **B14-SPG** | **B15-SPG** | **VB12-SPG** |
|---|---|---|---|---|
| Zylindertemperaturen Zone 1 | °C | 315 | 315 | 265 |
| Zylindertemperaturen Zone 2 | °C | 320 | 320 | 270 |
| Zylindertemperaturen Zone 3 | °C | 325 | 325 | 275 |
| Zylindertemperaturen Zone 4 | °C | 330 | 330 | 280 |
| Werkzeugtemperatur | °C | 150 | 150 | 80 |
| Wasseraufnahme | Gew.-% | 3.0 | 2.9 | 1.4 |
| Zug-E-Modul, trocken | MPa | 1540 | 1480 | 1230 |
| Zug-E-Modul, wassergesättigt | MPa | 1590 | 1540 | 700 |
| Modulverhältnis | | 1.03 | 1.04 | 0.57 |
| Maximale Zugfestigkeit, trocken | MPa | 52 | 50 | 45 |
| Maximale Zugfestigkeit, wassergesättigt | | 44 | 43 | 44 |
| Festigkeitsverhältnis | | 0.85 | 0.86 | 0.98 |
| HDT B (0.45 MPa) | °C | 123 | 127 | 101 |
| HDT A (1.8 MPa) | °C | 107 | 106 | 52 |

| *8x1 cm Rohre* | | | | |
|---|---|---|---|---|
| Drehzahl | UPM | 38 | 38 | 64 |
| Massetemperatur | °C | 308 | 310 | 258 |
| Abzugsgeschwindigkeit | m/min | 20 | 20 | 40 |
| Kälteschlag, -40°C, 500g | % Bruch | ohne Bruch | 10% Bruch | ohne Bruch |
| Berstdruck, 23°C | bar | 75 | 91 | 99 |
| Berstdruck, 130°C | bar | 28 | 36 | 23 |
| Bruchspannung | MPa | 42 | 45 | 32 |
| Bruchdehnung | % | 148 | 173 | 203 |

Bei Grilamid XE 3835 handelt es sich um ein schlagzähmodifiziertes PA12 der EMS-CHEMIE AG, Schweiz.

Aus den in Tabelle 8 aufgeführten Produkten wurden mit einem Nokia Maillefer Rohrextruder BMA 60-24D Rohre der Dimension 8x1 mm bei den angegebenen Bedingungen hergestellt.

### Beispiele mit flachen Glasfasern, Beispiele B16-B18

**Tabelle 9: Zusammensetzung und Eigenschaften der mit flachen Glasfasern verstärkten Compounds. (*) Mechanische Eigenschaften längs und quer zur Spritzrichtung wurden mit Hilfe des BIAX-Zugstabes ermittelt.**

| *Compound* | | **B16** | **B17** | **B18** |
|---|---|---|---|---|
| PA10T/6T(85/15)-NK | Gew.-% | 37.7 | 37.7 | 47.7 |
| Glasfaser mit kreisförmigem | | 60.0 | | |
| Querschnitt (NEG Ec03T-292H) | | | | |
| Flache Glasfasern | Gew.-% | | 60.0 | 50.0 |
| (NITTOBO CSG3PA-820) | | | | |
| Kaolin | Gew.-% | 0.16 | 0.16 | 0.16 |
| KJ/Ca-stearat 98/2 | Gew.-% | 0.12 | 0.12 | 0.12 |
| CuJ | Gew.-% | 0.02 | 0.02 | 0.02 |
| Zylindertemperatur | °C | 330 | 330 | 330 |
| Schneckendrehzahl | UPM | 150 | 150 | 150 |
| Durchsatz | kg/h | 8 | 8 | 8 |

| *Spritzgussprüfkörper* | | **B16-SPG** | **B17-SPG** | **B18-SPG** |
|---|---|---|---|---|
| Zylindertemperaturen Zone 1 | °C | 325 | 325 | 325 |
| Zylindertemperaturen Zone 2 | °C | 330 | 330 | 330 |
| Zylindertemperaturen Zone 3 | °C | 335 | 335 | 335 |
| Zylindertemperaturen Zone 4 | °C | 340 | 340 | 340 |
| Werkzeugtemperatur | °C | 120 | 120 | 120 |
| Wasseraufnahme (240h, 95°C) | Gew.-% | 1.12 | 0.96 | 1.50 |
| Zug-E-Modul, trocken | MPa | 20600 | 20700 | 16300 |
| Zug-E-Modul, wassergesättigt | MPa | 20200 | 21300 | 17000 |
| Modulverhältnis | | 0.98 | 1.03 | 1.04 |
| Maximale Zugfestigkeit, trocken | MPa | 225 | 240 | 241 |
| Maximale Zugfestigkeit, | MPa | 184 | 213 | 223 |
| wassergesättigt | | | | |
| Festigkeitsverhältnis | | 0.82 | 0.89 | 0.93 |
| HDT A (1.8 MPa) | °C | 267 | >280 | 274 |
| HDT C (8 MPa) | °C | 204 | 236 | 222 |
| *⁾Zug-E-Modul längs | MPa | 20600 | 19800 | 16200 |
| *⁾Zug-E-Modul quer | MPa | 9000 | 11200 | 9400 |
| Verhältnis von Zug-E-Modul quer zu | MPa | 0.44 | 0.57 | 0.58 |
| längs | | | | |
| ^{*)} Reissfestigkeit längs | MPa | 226 | 229 | 230 |
| ^{*)}Reissfestigkeit quer | MPa | 77 | 115 | 115 |
| Verhältnis der Reissfestigkeiten quer | | 0.34 | 0.50 | 0.50 |
| und längs | | | | |

- Flache Glasfasern:: NITTOBO CSG3PA-820, 3 mm lang, 28 µm breit, 7 µm dick, Aspektverhältnis der Querschnittsachsen = 4, Aminosilanschlichte, NITTO BOSEKI, Japan (flache Glasfasern im Sinne der obigen Beschreibung)

Die Beispiele B16 bis B18 beruhen auf einem Nachkondensat des Copolyamids PA 10T/6T mit einem Molverhältnis von 85:15, das analog zu den vorangegangen Beispielen aus dem entsprechenden Vorkondensat hergestellt wurde.

Die mit flachen Glasfasern verstärkte Compounds weisen insbesondere eine höhere Quersteifigkeit und -festigkeit sowie einen höheren HDT C Wert im Vergleich mit den konventionell verstärkten, d.h. mit im Querschnitt kreisförmigen Glasfasern verstärkten Compounds auf.

### Beispiele für flammgeschützte Formmassen, Beispiele B19-B21 und Vergleichsbeispiele VB13 und VB14:

**Tabelle 10: Zusammensetzung und Eigenschaften der mit halogenfreiem Flammschutz ausgerüsteten Compounds.**

| *Compound* | | **B19** | **B20** | **B21** | **VB13** | **VB14** |
|---|---|---|---|---|---|---|
| PA10T/6T(85/15)-NK | Gew.-% | 83.7 | 66.7 | 56.7 | | |
| PA8T/6T(75:25)-NK | Gew.-% | | | | 83.7 | |
| PA12T-NK | Gew.-% | | | | | 83.7 |
| Alugel 34-TH (Al-Tristearat) | Gew.-% | 0.3 | 0.3 | 0.3 | 0.3 | 0.3 |
| Exolit GP1230 | Gew.-% | 15.0 | 12.0 | 12.0 | 15.0 | 15.0 |
| Melapur 200/70 | Gew.-% | 0.5 | 0.5 | 0.5 | 0.5 | 0.5 |
| Irganox 1098 | Gew.-% | 0.5 | 0.5 | 0.5 | 0.5 | 0.5 |
| Glasfaser (Vetrotex 995 EC10-4.5) | Gew.-% | | 20.0 | 30.0 | | |
| Zylindertemperatur | °C | 330 | 330 | 330 | 330 | 330 |
| Schneckendrehzahl | UPM | 150 | 150 | 150 | 150 | 150 |
| Durchsatz | kg/h | 8 | 8 | 8 | 8 | 8 |

| *Spritzgussprüfkörper* | | **B19SPG** | **B20SPG** | **B21SPG VB13SPG VB14SPG** | | |
|---|---|---|---|---|---|---|
| Zylindertemperaturen Zone 1 | °C | 325 | 325 | 325 | 325 | 325 |
| Zylindertemperaturen Zone 2 | °C | 330 | 330 | 330 | 330 | 330 |
| Zylindertemperaturen Zone 3 | °C | 335 | 335 | 335 | 335 | 335 |
| Zylindertemperaturen Zone 4 | °C | 340 | 340 | 340 | 340 | 340 |
| Werkzeugtemperatur | °C | 120 | 120 | 120 | 120 | 120 |
| Wasseraufnahme (240h, 95°C) | | 2.1 | 1.6 | 1.4 | 2.9 | 1.9 |
| Zug-E-Modul, trocken | MPa | 3800 | 8100 | 10300 | 3800 | 3700 |
| Reissfestigkeit, trocken | MPa | 78 | 142 | 154 | 40 | 71 |
| Reissdehnung, trocken | % | 5.4 | 3.3 | 2.9 | 1.3 | 4.8 |
| Brandklassifizierung UL94 (Probendicke: 0.8 mm) | | V0 | V0 | V0 | V2 | V2 |

- Melapur®200/70:: ein Melaminpolyphosphat (Ciba Spez. GmbH), Flammschutzmittel, CAS-Nr: 218768-84-4
- Exolit®GP1230:: ein phosphororganisches Salz (Clariant Produkte GmbH), Flammschutzmittel.

Die Beispiele B19 bis B21 beruhen auf einem Nachkondensat des Copolyamids PA 10T/6T mit einem Molverhältnis von 85:15, das analog zu den vorangegangen Beispielen aus dem entsprechenden Vorkondensat hergestellt wurde.

Die halogenfrei flammgeschützten Formmassen gemäss den Beispielen 19 bis 21 sind mit und ohne Glasfaserverstärkung sicher V0, während die Formmassen gemäss VB13 und VB14, trotz identischer Flammschutzausrüstung lediglich die UL-Klassifizierung V2 erreichen.

## Patentansprüche

1. Polyamid-Formmasse mit folgender Zusammensetzung:
(A) 30 - 100 Gew.-% wenigstens eines Copolyamids 10T/6T, wobei dieses aufgebaut ist aus
(A1) 40 bis 95 Mol-% 10T-Einheiten, gebildet aus den Monomeren 1,10-Decandiamin und Terephthalsäure
(A2) 5 bis 60 Mol-% 6T-Einheiten, gebildet aus den Monomeren 1,6-Hexandiamin und Terephthalsäure
(B) 0 - 70 Gew.-% Verstärkungs- und/oder Füllstoffe
(C) 0 - 50 Gew.-% Additive und/oder weitere Polymere
wobei die Komponenten A bis C zusammen 100% ergeben,
mit der Massgabe, dass in der Komponente (A) unabhängig voneinander in (A1) und/oder (A2) bis zu 30 Mol-%, bezogen auf die Gesamtmenge der Dicarbonsäuren, der Terephthalsäure ersetzt sein können durch andere aromatische, aliphatische oder cycloaliphatische Dicarbonsäuren mit 6 bis 36 Kohlenstoffatomen,
und mit der Massgabe, dass in der Komponente (A) unabhängig voneinander in (A1) und/oder (A2) bis zu 30 Mol% von 1,10-Decandiamin respektive 1,6-Hexandiamin, bezogen auf die Gesamtmenge der Diamine, ersetzt sein können durch andere Diamine mit 4 bis 36 Kohlenstoffatomen,
und mit der Massgabe, dass nicht mehr als 30 Mol-% in der Komponente (A), bezogen auf die Gesamtmenge der Monomeren, durch Lactame oder Aminosäuren gebildet sein können,
und mit der Massgabe, dass die Summe der Monomere, die Terephthalsäure, 1,6-Hexandiamin und 1,10-Decandiamin ersetzen, eine Konzentration von 30 Mol-% in Bezug auf die Gesamtmenge der in Komponente A eingesetzten Monomere nicht überschreitet.

2. Polyamid-Formmasse nach Anspruch 1, **dadurch gekennzeichnet, dass** die Komponente (A) und/oder die ganze Polyamid-Formmasse einen Schmelzpunkt respektive eine Formbeständigkeitstemperatur nach ISO-R 75, Verfahren A (DIN 53 461) von mehr als 260°C oder mehr als 270°C, bevorzugtermassen im Bereich zwischen 270 und 320 °C aufweist, insbesondere bevorzugt im Bereich von 270-310°C.

3. Polyamid-Formmasse nach einem der vorhergehenden Ansprüche, **dadurch gekennzeichnet, dass** die Komponente (A) und/oder die ganze Polyamid-Formmasse eine Wasseraufnahme von weniger als 5 Gew.-%, insbesondere von weniger als 4 Gew.-% aufweist nach 240h in Wasser bei 95°C.

4. Polyamid-Formmasse nach einem der vorhergehenden Ansprüche, **dadurch gekennzeichnet, dass** das Verhältnis der Zug-E-Moduli von nassem zum trockenem Zustand grösser oder gleich 0.95, bevorzugt grösser oder gleich 1.00 ist.

5. Polyamid-Formmasse nach einem der vorhergehenden Ansprüche, **dadurch gekennzeichnet, dass** das Verhältnis der maximalen Zugfestigkeiten von nassem zum trockenem Zustand grösser oder gleich 0.85, bevorzugt grösser oder gleich 0.90 ist.

6. Polyamid-Formmasse nach einem der vorhergehenden Ansprüche, **dadurch gekennzeichnet, dass** innerhalb der Komponente (A) die Anteile (A1) 40 bis 90 Mol-% ausmachen und (A2) 10 bis 60 Mol-% bevorzugtermassen (A1) 40 bis 80 Mol-% und (A2) 20 bis 60 Mol-%, insbesondere bevorzugtermassen (A1) 40 bis 75 Mol-% und (A2) 25 bis 60 Mol-%.

7. Polyamid-Formmasse nach einem der vorhergehenden Ansprüche, **dadurch gekennzeichnet, dass** das Copolyamid 10T/6T der Komponente (A) im wesentlichen ausschliesslich, bevorzugt vollständig ausschliesslich auf Terephthalsäure als Dicarbonsäure basiert.

8. Polyamid-Formmasse nach einem der vorhergehenden Ansprüche 1 - 6, **dadurch gekennzeichnet, dass** die anderen aromatischen, aliphatischen oder cycloaliphatische Dicarbonsäuren mit 6 bis 36 Kohlenstoffatomen, welche die Terephthalsäure teilweise ersetzen, ausgewählt sind aus der folgenden Gruppe: Naphthalindicarbonsäure (NDA), Isophthalsäure (IPS), Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure, Dimersäure, cis- und/oder trans-Cyclohexan-1,4-dicarbonsäure, cis- und/oder trans-Cyclohexan-1,3-dicarbonsäure (CHDA), sowie Kombinationen davon.

9. Polyamid-Formmasse nach Anspruch 8, **dadurch gekennzeichnet, dass** die anderen aromatischen, aliphatischen oder cycloaliphatische Dicarbonsäuren mit 6 bis 36 Kohlenstoffatomen, welche die Terephthalsäure teilweise ersetzen, für die Einstellung einer höheren Glasübergangstemperatur ausgewählt sind aus der folgenden Gruppe: Naphthalindicarbonsäure (NDA), Isophthalsäure (IPS), trans-Cyclohexan-1,3-dicarbonsäure (CHDA) oder Kombinationen davon, wobei Naphthalindicarbonsäure (NDA) bevorzugt ist, und für die Einstellung einer tieferen Glasübergangstemperatur ausgewählt sind aus der folgenden Gruppe: Dodecandisäure, Brassylsäure, Tetradecandisäure, Pentadecandisäure, Hexadecandisäure, Octadecandisäure, Dimersäure, oder Kombinationen davon, wobei Dodecandisäure bevorzugt ist.

10. Polyamid-Formmasse nach einem der vorhergehenden Ansprüche, **dadurch gekennzeichnet, dass** das Copolyamid 10T/6T der Komponente (A) im wesentlichen ausschliesslich, bevorzugt vollständig ausschliesslich auf 1,10-Decandiamin für (A1) und 1,6-Hexandiamin für (A2) als Diamin basiert.

11. Polyamid-Formmasse nach einem der vorhergehenden Ansprüche 1-9, **dadurch gekennzeichnet, dass** die anderen Diamine mit 4 bis 36 Kohlenstoffatomen, die in der Komponente (A) unabhängig voneinander in (A1) und/oder (A2) bis zu 30 Mol-% von 1,10-Decandiamin respektive 1,6-Hexandiamin, bezogen auf die Gesamtmenge der Diamine, ersetzen, ausgewählt sind aus folgender Gruppe: lineare oder verzweigte, aliphatische Diamine wie 1,4-Butandiamin, 1,5-Pentandiamin, 2-Methyl-1,5-pentandiamin (MPMD), 1,8-Octandiamin (OMDA), 1,9-Nonandiamin (NMDA), 2-Methyl-1,8-octandiamin (MODA), 2,2,4-Trimethylhexamethylendiamin (TMHMD), 2,4,4-Trimethylhexamethylendiamin (TMHMD), 5-Methyl-1,9-Nonandiamin, 1,11-Tridecandiamin, 2-Butyl-2-ethyl-1,5-pentandiamin, 1,12-Dodecandiamin, 1,13 Tridecandiamin, 1,14-Tetradecandiamin, 1,16-Hexadecandiamin, 1,18-Octadecandiamin, cycloaliphatische Diamine wie Cyclohexandiamin, 1,3-bis(Aminomethyl) cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM), araliphatische Diamine wie m-Xylylendiamin (MXDA) sowie Kombinationen davon.

12. Polyamid-Formmasse nach Anspruch 11, **dadurch gekennzeichnet, dass** die anderen Diamine mit 4 bis 36 Kohlenstoffatomen, die in der Komponente (A) unabhängig voneinander in (A1) und/oder (A2) bis zu 30 Mol-% von 1,10-Decandiamin respektive 1,6-Hexandiamin, bezogen auf die Gesamtmenge der Diamine, ersetzen, für die Einstellung einer höheren Glasübergangstemperatur ausgewählt sind aus der folgenden Gruppe: 2-Methyl-1,5-pentandiamin (MPMD), 2-Methyl-1,8-octandiamin (MODA), 2,2,4-Trimethylhexamethylendiamin (TMHMD), 1,3-bis(Aminomethyl) cyclohexan (BAC), 4,4'-Diaminodicyclohexylmethan (PACM), 3,3'-Dimethyl-4,4'-diaminodicyclohexylmethan (MACM), oder Kombinationen davon, wobei 1,3-bis(Aminomethyl) cyclohexan (BAC) und/oder 4,4'-Diaminodicyclohexylmethan (PACM) bevorzugt sind, und für die Einstellung einer tieferen Glasübergangstemperatur ausgewählt sind aus der folgenden Gruppe: 1,12-Dodecandiamin, 1,13 Tridecandiamin, 1,14-Tetradecandiamin, 1,16-Hexadecandiamin, 1,18-Octadecandiamin, oder Kombinationen davon, wobei 1,12-Dodecandiamin bevorzugt ist.

13. Polyamid-Formmasse nach einem der vorhergehenden Ansprüche, **dadurch gekennzeichnet, dass** die Komponente (A) im wesentlichen ausschliesslich, bevorzugt vollständig ausschliesslich aus den Bestandteilen (A1) und (A2) besteht.

14. Polyamid-Formmasse nach einem der vorhergehenden Ansprüche 1-12, **dadurch gekennzeichnet, dass** die Lactame oder Aminosäuren ausgewählt sind ausfolgender Gruppe: Caprolactam (CL), α,ω-Aminocapronsäure, α,ω-Aminononansäure, α,ω-Aminoundecansäure (AUA), Laurinlactam (LL), ω-Aminododecansäure (ADA), sowie Kombinationen davon.

15. Polyamid-Formmasse nach einem der vorhergehenden Ansprüche, **dadurch gekennzeichnet, dass** es sich bei der Komponente (B) wenigstens teilweise um Glas- und/oder Kohlenstofffasern handelt, wobei es sich bevorzugtermassen um Kurzfasern wie Schnittglas mit einer Länge von 2 - 50 mm oder um Endlosfasern handeln kann, und wobei die Fasern weiter bevorzugt von nichtkreisförmiger Querschnittsfläche sind und ein Abmessungsverhältnis von der Hauptquerschnittsachse zur Nebenquerschnittsachse von mehr als 2, bevorzugt im Bereich von 2 bis 8, insbesondere von 2 bis 5 aufweisen.

16. Polyamid-Formmasse nach Anspruch 15, **dadurch gekennzeichnet, dass** es sich bei der Komponente (B) um Kurzfasern und/oder Endlosfasern in Form von Glasfasern handelt, wobei diese bevorzugtermassen einen Durchmesser von 10 bis 20 µm, insbesondere bevorzugt von 12 bis 18 µm aufweisen, und wobei der Querschnitt der Glasfasern rund, oval oder eckig sein kann.

17. Polyamid-Formmasse nach Anspruch 16, **dadurch gekennzeichnet, dass** es sich um Kurzfasern und/oder Endlosglasfasern mit einem Durchmesser von 10 bis 14 µm, insbesondere solche mit einem Durchmesser von 10 bis 12 µm handelt.

18. Polyamid-Formmasse nach einem der vorhergehenden Ansprüche, **dadurch gekennzeichnet, dass** es sich bei der Komponente (C) um Additive und/oder weitere Polymere ausgewählt aus der folgenden Gruppe handelt: Schlagzähmodifikatoren, Haft- oder Verträglichkeitsvermittler, Kristallisations-Beschleuniger oder -Verzögerer, Fliesshilfsmittel, Gleitmittel, Entformungsmittel, Pigmente, Farbstoff- und Markierungsstoffe, Weichmacher, Stabilisatoren, Verarbeitungshilfsmittel, flammhemmende Zusätze, bevorzugt halogenfreie flammhemmende Zusätze, Antistatika, Nanoteilchen in Plättchenform, Leitfähigkeitsadditive, wie Russ, Graphitpulver oder Kohlenstoffnanofibrillen, Residuen aus Polymerisationsverfahren wie Katalysatoren, Salze und deren Derivate, sowie Regler wie Monosäuren, Monoamine.

19. Polyamid-Formmasse nach einem der vorhergehenden Ansprüche, **dadurch gekennzeichnet, dass** die Summe der Monomere, die Terephthalsäure, 1,6-Hexandiamin und 1,10-Decandiamin ersetzen, eine Konzentration von 20 Mol-%, bevorzugt 10 Mol-%, in Bezug auf die Gesamtmenge der in Komponente A eingesetzten Monomere nicht überschreitet.

20. Polyamid-Mischung enthaltend Polyamid-Formmasse nach einem der vorhergehenden Ansprüche.

21. Polyamid-Mischung enthaltend Polyamid-Formmasse nach einem der vorhergehenden Ansprüche und Polyphenylenether, insbesondere in Form von Homopolymeren, Copolymer, Pfropfcopolymeren, Blockcopolymer oder Ionomeren, insbesondere bevorzugt Poly(2,6-diethyl-1,4-phenylen)ether, Poly(2-methyl-6-ethyl-1,4-phenylen)ether, Poly(2-methyl- 6-propyl-1,4-phenylen)ether, Poly(2,6-dipropyl-1,4-phenylen)ether, Poly(2-ethyl-6-propyl-1,4-phenylen)ether oder Copolymere, wie solche, die 2,3,6-Trimethylphenol enthalten, oder Mischungen davon, wobei insbesondere bevorzugt 10-45 Gew.-% Polyphenylenether in der Mischung enthalten sind sowie gegebenenfalls bis zu 30 Gew.-%, bevorzugt bis zu 15 Gew.-% Schlagzähmodifikator.

22. Granulat, insbesondere langfaserverstärktes Stäbchengranulat, Halbzeug oder Formkörper aus einer Polyamid-Formmasse nach einem der vorhergehenden Ansprüche 1-19 oder aus einer Polyamid-Mischung nach einem der Ansprüche 21 und 20, insbesondere bevorzugt zur Verwendung in feuchter und/oder nasser Umgebung.

23. Pulver aus einer Polyamid-Formmasse nach einem der vorhergehenden Ansprüche 1-19 oder aus einer Polyamid-Mischung nach einem der Ansprüche 21 und 20, insbesondere bevorzugt mit einer mittleren Komgrösse von 30-200 µm.

24. Pulver nach Anspruch 23, **dadurch gekennzeichnet, dass** es eine Lösungsviskosität bei 0.5 Gew.-% in m-Kresol bei 20°C im Bereich von 1.3-2.0 aufweist,
wobei die Polyamid-Formmasse bevorzugt geregelt ist insbesondere bevorzugt mit einem Verhältnis der Carboxyl- zu Aminoendgruppen von grösser oder gleich 1: 2 beziehungsweise 2: 1, bevorzugtermassen von grösser oder gleich 1: 3 beziehungsweise 3:1.

25. Pulver nach einem der Ansprüche 23 oder 24, **dadurch gekennzeichnet, dass** es sich um eine Mischung von entgegengesetzt difunktional geregeltem PA10T/6T aus getrennt amin- und carboxylgeregelten Pulverteilchen handelt.

26. Pulver nach einem der Ansprüche 23-25, **dadurch gekennzeichnet, dass** das Pulver neben Copolyamid 10T/6T Partikeln einen weiteren Füllstoff aufweist, insbesondere bevorzugt in Form von Voll- oder Hohl-Glaskugeln, bevorzugtermassen mit einem mittleren Durchmesser von 20-80 µm.

27. Verwendung eines Pulvers nach einem der Ansprüche 23-26 in einem selektiven Lasersinter-Verfahren.

28. Formkörper hergestellt unter Verwendung einer Polyamid-Formmasse nach einem der Ansprüche 1-19, unter Verwendung einer Polyamid-Mischung nach einem der Ansprüche 20-21, unter Verwendung eines Granulates nach Anspruch 22 oder unter Verwendung eines Pulvers nach einem der Ansprüche 23-26, in Letzterem Fall bevorzugtermassen hergestellt in einem selektiven Lasersinter-Verfahren.

29. Verfahren zur Herstellung einer Polyamid-Formmasse nach einem der vorhergehenden Ansprüche 1-19, **dadurch gekennzeichnet, dass** bei der Herstellung der Komponente (A) wenigstens ein Polykondensationskatalysator den Monomermischungen zugesetzt wird in einem Anteil von 0.005 bis 1.5 Gewichts-%, wobei es sich dabei bevorzugtermassen um Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie Na, K, Mg, Ga, Zn oder Al und/oder deren Ester wie Triphenylphosphat, Triphenylphosphit oder Tris-(nonylphenyl)-phosphit oder Mischungen davon handelt.

30. Verfahren nach Anspruch 29, **dadurch gekennzeichnet, dass** es sich beim Polykondensationskatalysator um hypophosphorige Säure und Natriumhydrogenhypophosphit Monohydrat in einer Menge von 100 bis 500 ppm Phosphor bezogen auf das teilaromatische Copolyamid (A) 10T/6T handelt.

31. Verfahren nach einem der Ansprüche 29 oder 30, **dadurch gekennzeichnet, dass** zum Ausgleich des Diaminverlustes dem Monomeransatz ein Diaminüberschuss von 1 bis 8 Gewichts-% bezogen auf die Gesamtmenge der Diamine zugesetzt wird.

32. Verfahren nach einem der Ansprüche 29-31, **dadurch gekennzeichnet, dass** zur Reglung der Molmasse, der relativen Viskosität bzw. der Fliessfähigkeit oder des MVR dem Ansatz und/oder dem Vorkondensat Regler zugesetzt werden, wobei es sich dabei um Monosäuren oder Monoamine handeln kann, vorzugsweise ausgewählt aus folgender Gruppe: aliphatische, cycloaliphatische oder aromatische Monocarbonsäuren oder Monoamine wie Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, resp. Kombinationen davon oder monofunktionelle Verbindungen, die mit einer Amino- oder Säuregruppe reagieren können wie Anhydride, Isocyanate, Säurehalogenide oder Ester respektive Kombinationen davon, wobei die Einsatzmenge der Regler bevorzugtermassen zwischen 10 und 200 mmol/kg - Regler/Polymer - liegt.

## Claims

1. A polyamide molding composition with the following constitution:
(A) from 30 to 100% by weight of at least one copolyamide 10T/6T, wherein this is composed of
(A1) from 40 to 95 mol% of 10T units, formed from the monomers 1,10-decanediamine and terephthalic acid
(A2) from 5 to 60 mol% of 6T units, formed from the monomers 1,6-hexanediamine and terephthalic acid
(B) from 0 to 70% by weight of reinforcing materials and/or fillers
(C) from 0 to 50% by weight of additives and/or further polymers
where the entirety of components A to C is 100%,
with the proviso that in component (A), independently of one another, in (A1) and/or (A2) up to 30 mol%, based on the entirety of the dicarboxylic acids, of the terephthalic acid can have been replaced by other aromatic, aliphatic, or cycloaliphatic dicarboxylic acids having from 6 to 36 carbon atoms,
and with the proviso that in component (A), independently of one another, in (A1) and/or (A2) up to 30 mol% of 1,10-decanediamine and respectively 1,6-hexanediamine, based on the entirety of the diamines, can have been replaced by other diamines having from 4 to 36 carbon atoms,
and with the proviso that not more than 30 mol% in component (A), based on the entirety of the monomers, can have been formed via lactams or amino acids,
and with the proviso that the concentration of the entirety of the monomers which replace the terephthalic acid, 1,6-hexanediamine, and 1,10-decanediamine does not exceed 30 mol%, based on the entirety of the monomers used in component A.

2. The polyamide molding composition as claimed in claim 1, wherein the melting point and respectively the temperature of deflection to ISO-R 75, method A (DIN 53 461) of component (A) and/or of the entire polyamide molding composition is above 260°C or above 270°C, preferably in the range from 270 to 320°C, particularly preferably in the range from 270 to 310°C.

3. The polyamide molding composition as claimed in any of the preceding claims, wherein the water absorption of component (A) and/or of the entire polyamide molding composition is less than 5% by weight, in particular less than 4% by weight, after 240 h in water at 95°C.

4. The polyamide molding composition as claimed in any of the preceding claims, wherein the ratio of wet:dry tensile moduli of elasticity is greater than or equal to 0.95, preferably greater than or equal to 1.00.

5. The polyamide molding composition according to any of the preceding claims, wherein the ratio of wet:dry maximum tensile strengths is greater than or equal to 0.85, preferably greater than or equal to 0.90.

6. The polyamide molding composition as claimed in any of the preceding claims, wherein, within component (A), the (A1) fractions make up from 40 to 90 mol% and the (A2) fractions make up from 10 to 60 mol%, and with preference the (A1) fractions make up from 40 to 80 mol% and the (A2) fractions make up from 20 to 60 mol%, and with particular preference the (A1) fractions make up from 40 to 75 mol% and the (A2) fractions make up from 25 to 60 mol%.

7. The polyamide molding composition according to any of the preceding claims, wherein the 10T/6T copolyamide of component (A) is based in essence exclusively, preferably completely exclusively, on terephthalic acid as dicarboxylic acid.

8. The polyamide molding composition as claimed in any of the preceding claims 1 to 6, wherein the other aromatic, aliphatic, or cycloaliphatic dicarboxylic acids having from 6 to 36 carbon atoms, which to some extent replace the terephthalic acid, have been selected from the following group: naphthalenedicarboxylic acid (NDA), isophthalic acid (IPS), adipic acid, suberic acid, azaleic acid, sebacic acid, undecanedioic acid, dodecanedioic acid, brassylic acid, tetradecanedioic acid, pentadecanedioic acid, hexadecanedioic acid, octadecanedioic acid, dimer acid, cis- and/or trans-cyclohexane-1,4-dicarboxylic acid, cis- and/or trans-cyclohexane-1,3-dicarboxylic acid (CHDA), and combinations thereof.

9. The polyamide molding composition as claimed in claim 8, wherein, for a higher glass transition temperature, the other aromatic, aliphatic, or cycloaliphatic dicarboxylic acids having from 6 to 36 carbon atoms, which to some extent replace the terephthalic acid, have been selected from the following group: naphthalenedicarboxylic acid (NDA), isophthalic acid (IPS), trans-cyclohexane-1,3-dicarboxylic acid (CHDA) or combinations thereof, preference being given to naphthalenedicarboxylic acid (NDA), and for a lower glass transition temperature they have been selected from the following group: dodecanedioic acid, brassylic acid, tetradecanedioic acid, pentadecanedioic acid, hexadecanedioic acid, octadecanedioic acid, dimer acid, or combinations thereof, preference being given to dodecanedioic acid.

10. The polyamide molding composition as claimed in any of the preceding claims, wherein the 10T/6T copolyamide of component (A) is based in essence exclusively, preferably completely exclusively, on 1,10-decanediamine for (A1) and 1,6-hexanediamine for (A2), as diamine.

11. The polyamide molding composition as claimed in any of the preceding claims 1 to 9, wherein the other diamines having from 4 to 36 carbon atoms which in component (A), independently of one another, in (A1) and/or (A2) replace up to 30 mol% of 1,10-decanediamine and respectively 1,6-hexanediamine, based on the entirety of the diamines, have been selected from the following group: linear or branched, aliphatic diamines, such as 1,4-butanediamine, 1,5-pentanediamine, 2-methyl-1,5-pentanediamine (MPMD), 1,8-octanediamine (OMDA), 1,9-nonanediamine (NMDA), 2-methyl-1,8-octanediamine (MODA), 2,2,4-trimethylhexamethylenediamine (TMHMD), 2,4,4-trimethylhexamethylenediamine (TMHMD), 5-methyl-1,9-nonanediamine, 1,11-tridecanediamine, 2-butyl-2-ethyl-1,5-pentanediamine, 1,12-dodecanediamine, 1,13-tridecanediamine, 1,14-tetradecanediamine, 1,16-hexadecanediamine, 1,18-octadecanediamine, cycloaliphaticdiamines such as cyclohexanediamine, 1,3-bis(aminomethyl)cyclohexane (BAC), isophoronediamine, norbornanedimethylamine, 4,4'-diaminodicyclohexylmethane (PACM), 2,2-(4,4'-diaminodicyclohexyl)propane (PACP), and 3,3'-dimethyl-4,4'-diaminodicyclohexylmethane (MACM), araliphatic diamines, such as m-xylylenediamine (MXDA), and combinations thereof.

12. The polyamide molding composition as claimed in claim 11, wherein, for a higher glass transition temperature, the other diamines having from 4 to 36 carbon atoms which in component (A), independently of one another, in (A1) and/or (A2) replace up to 30 mol% of 1,10-decanediamine and respectively 1,6-hexanediamine, based on the entirety of the diamines, have been selected from the following group: 2-methyl-1,5-pentanediamine (MPMD), 2-methyl-1,8-octanediamine (MODA), 2,2,4-trimethylhexamethylenediamine (TMHMD), 1,3-bis(aminomethyl)cyclohexane (BAC), 4,4'-diaminodicyclohexylmethane (PACM), 3,3'-dimethyl-4,4'-diaminodicyclohexylmethane (MACM), and combinations thereof, preference being given here to 1,3-bis(aminomethyl)cyclohexane (BAC) and/or 4,4'-diaminodicyclohexylmethane (PACM), and, for a lower glass transition temperature they have been selected from the following group: 1,12-dodecanediamine, 1,13-tridecanediamine, 1,14-tetradecanediamine, 1,16-hexadecanediamine, 1,18-octadecanediamine, and combinations thereof, preference being given here to 1,12-dodecanediamine.

13. The polyamide molding composition as claimed in any of the preceding claims, wherein component (A) is in essence exclusively, preferably completely exclusively, composed of the constituents (A1) and (A2).

14. The polyamide molding composition as claimed in any of the preceding claims 1 to 12, wherein the lactams or amino acids have been selected from the following group: caprolactam (CL), α,ω-aminocaproic acid, α,ω-aminononanoic acid, α,ω-aminoundecanoic acid (AUA), laurolactam (LL), ω-aminododecanoic acid (ADA), and combinations of these.

15. The polyamide molding composition as claimed in any of the preceding claims, wherein component (B) is at least to some extent glass fibers and/or carbon fibers, where these can preferably involve short fibers, such as chopped glass whose length is from 2 to 50 mm, or continuous-filament fibers, and where further preference is given to fibers which have non-circular cross section and which have a main cross-sectional axis: secondary cross-sectional axis dimensional ratio of more than 2, preferably in the range from 2 to 8, in particular from 2 to 5.

16. The polyamide molding composition as claimed in claim 15, wherein component (B) involves short fibers and/or continuous-filament fibers in the form of glass fibers, where these preferably have a diameter of from 10 to 20 µm, particularly preferably from 12 to 18 µm, and where the cross section of the glass fibers can be round, oval, or angular.

17. The polyamide molding composition as claimed in claim 16, which involves short fibers and/or continuous-filament glass fibers whose diameter is from 10 to 14 µm, in particular those whose diameter is from 10 to 12 µm.

18. The polyamide molding composition as claimed in any of the preceding claims, wherein component (C) involves additives and/or further polymers selected from the following group: impact modifiers, adhesion promoters or compatibilizers, crystallization accelerators or crystallization retarders, flow aids, lubricants, mold-release agents, pigments, dyes and markers, plasticizers, stabilizers, processing aids, flame-retardant additions, preferably halogen-free flame-retardant additions, antistatic agents, nanoparticles in lamellar form, conductivity additives, such as carbon black, graphite powder, or carbon nanofibrils, residues from polymerization processes, e.g. catalysts, salts and their derivatives, and regulators, such as monoacids, monoamines.

19. The polyamide molding composition as claimed in any of the preceding claims, wherein the concentration of the entirety of the monomers which replace terephthalic acid, 1,6-hexanediamine, and 1,10-decanediamine does not exceed 20 mol%, preferably 10 mol%, based on the entirety of the monomers used in component A.

20. A polyamide mixture comprising a polyamide molding composition as claimed in any of the preceding claims.

21. A polyamide mixture comprising a polyamide molding composition as claimed in any of the preceding claims and polyphenylene ether, in particular in the form of homopolymers, of copolymer, of graft copolymers, of block copolymer, or of ionomers, particularly preferably poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly (2-ethyl-6-propyl-1,4-phenylene) ether, or copolymers such as those which contain 2,3,6-trimethylphenol, or a mixture thereof, particular preference being given here to the presence of from 10 to 45% by weight of polyphenylene ether and, if appropriate up to 30% by weight, preferably up to 15% by weight, of impact modifier in the mixture.

22. A pelletized material, in particular a long-fiber-reinforced elongate pelletized material, or a semifinished product, or a molding, composed of a polyamide molding composition as claimed in any of the preceding claims 1 to 19, or composed of a polyamide mixture as claimed in either of claims 21 and 20, particularly preferably for use in a moist and/or wet environment.

23. A powder composed of a polyamide molding composition as claimed in any of the preceding claims 1 to 19, or composed of a polyamide mixture as claimed in either of claims 21 and 20, particularly preferably with an average grain size of from 30 to 200 µm.

24. The powder as claimed in claim 23, whose solution viscosity at 0.5% by weight in m-cresol at 20°C is in the range from 1.3 to 2.0, where the polyamide molding composition has preferably been regulated, particularly preferably using a carboxy end group: amino end group ratio greater than or equal to 1:2 and respectively 2:1, preferably greater than or equal to 1:3 and respectively 3:1.

25. The powder as claimed in either of claims 23 and 24, which involves a mixture of oppositely difunctionally regulated PA10T/6T composed of separately amine-regulated and carboxy-regulated powder particles.

26. The powder as claimed in any of claims 23 to 25, which comprises, alongside 10T/6T copolyamide particles, a further filler, particularly preferably in the form of solid or hollow glass beads, preferably with an average diameter of from 20 to 80 µm.

27. The use of a powder as claimed in any of claims 23 to 26 in a selective laser-sintering process.

28. A molding produced using a polyamide molding composition as claimed in any of claims 1 to 19, using a polyamide mixture as claimed in either of claims 20 to 21, using a pelletized material as claimed in claim 22, or using a powder as claimed in any of claims 23 to 26, in the latter case preferably produced in a selective laser-sintering process.

29. A process for the preparation of a polyamide molding composition as claimed in any of the preceding claims 1 to 19, which comprises adding, to the mononomer mixtures, during the preparation of component (A), a proportion of from 0.005 to 1.5% by weight of at least one polycondensation catalyst, where this preferably involves phosphorus compounds, such as phosphoric acid, phosphorous acid, hypophosphorous acid, phenylphosphonic acid, phenylphosphinic acid, and/or salts thereof with cations of valency from 1 to 3, e.g. Na, K, Mg, Ga, Zn, or Al, and/or their esters, such as triphenyl phosphate, triphenyl phosphite, or tris(nonylphenyl) phosphite, or a mixture thereof.

30. The process as claimed in claim 29, wherein the polycondensation catalyst involves hypophosphorous acid and sodium hydrogen hypophosphite monohydrate in an amount of from 100 to 500 ppm of phosphorus, based on the semiaromatic 10T/6T copolyamide (A).

31. The process as claimed in either of claims 29 and 30, wherein, to compensate diamine loss, a diamine excess of from 1 to 8% by weight, based on the entirety of the diamines, is added to the monomer mixture.

32. The process as claimed in any of claims 29 to 31, wherein, for regulation of the molar mass, of the relative viscosity and respectively of the flowability or the MVR, regulators are added to the mixture and/or to the precondensate and these can involve monoacids or monoamines, preferably selected from the following group: aliphatic, cycloaliphatic or aromatic monocarboxylic acids, or monoamines, e.g. acetic acid, propionic acid, butyric acid, valeric acid, caproic acid, lauric acid, stearic acid, 2-ethylhexanoic acid, cyclohexanoic acid, benzoic acid, butylamine, pentylamine, hexylamine, 2-ethylhexylamine, n-octylamine, n-dodecylamine, n-tetradecylamine, n-hexadecylamine, stearylamine, cyclohexylamine, 3-(cyclohexylamino)propylamine, methylcyclohexylamine, dimethylcyclohexylamine, benzylamine, 2-phenylethylamine, and respectively combinations thereof, or monofunctional compounds which can react with an amino group or acid group, e.g. anhydrides, isocyanates, acyl halides, or esters, and respectively combinations of these, where the amount used of the regulators is preferably from 10 to 200 mmol/kg - regulator/polymer.

## Revendications

1. Masse de moulage en polyamide présentant la composition suivante :
(A) 30-100% en poids d'au moins un copolyamide 10T/6T, celui-ci étant constitué par
(A1) 40 à 95% en mole d'unités 10T, formées par les monomères 1,10-décanediamine et acide téréphtalique
(A2) 5 à 60% en mole d'unités 6T, formées par les monomères 1,6-hexanediamine et acide téréphtalique
(B) 0-70% en poids de substances de renforcement et/ou de charges
(C) 0-50% en poids d'additifs et/ou d'autres polymères les composants A à C formant ensemble 100%,
- à condition que dans le composant (A), indépendamment l'un de l'autre, dans (A1) et/ou (A2), jusqu'à 30% en mole, par rapport à la quantité totale des acides dicarboxyliques, de l'acide téréphtalique puissent être remplacés par d'autres acides dicarboxyliques aromatiques, aliphatiques ou cycloaliphatiques comprenant 6 à 36 atomes de carbone,
- et à condition que dans le composant (A), indépendamment l'un de l'autre, dans (A1) et/ou (A2), jusqu'à 30% en mole, de la 1,10-décanediamine ou selon le cas, de la 1,6-hexanediamine, par rapport à la quantité totale des diamines, puissent être remplacés par d'autres diamines comprenant 4 à 36 atomes de carbone,
- et à condition que pas plus de 30% en mole dans le composant (A), par rapport à la quantité totale des monomères, puissent être formés par des lactames ou des aminoacides,
- et à condition que la somme des monomères qui remplacent l'acide téréphtalique, la 1,6-hexanediamine et la 1,10-décanediamine ne dépasse pas une concentration de 30% en mole par rapport à la quantité totale des monomères utilisés dans le composant A.

2. Masse de moulage en polyamide selon la revendication 1, **caractérisée en ce que** le composant (A) et/ou toute la masse de moulage en polyamide présente un point de fusion ou, selon le cas, une température de résistance au moulage selon la norme ISO-R 75, procédé A (DIN 53461) de plus de 260°C ou de plus de 270°C, de préférence dans la plage entre 270 et 320°C, en particulier de préférence dans la plage de 270-310°C.

3. Masse de moulage en polyamide selon l'une quelconque des revendications précédentes, **caractérisée en ce que** le composant (A) et/ou toute la masse de moulage en polyamide présente une absorption d'eau de moins de 5% en poids, en particulier de moins de 4% en poids après 240 h dans l'eau à 95°C.

4. Masse de moulage en polyamide selon l'une quelconque des revendications précédentes, **caractérisée en ce que** le rapport des modules de traction E à l'état humide et à l'état sec est plus grand ou égal à 0,95, de préférence plus grand ou égal à 1,00.

5. Masse de moulage en polyamide selon l'une quelconque des revendications précédentes, **caractérisée en ce que** le rapport des résistances maximales à la traction à l'état humide et à l'état sec est plus grand ou égal à 0,85, de préférence plus grand ou égal à 0,90.

6. Masse de moulage en polyamide selon l'une quelconque des revendications précédentes, **caractérisée en ce que** dans le composant (A) la proportion (A1) représente 40 à 90% en mole et la proportion (A2) représente 10 à 60% en mole, de préférence (A1) représente 40 à 80% en mole et (A2) représente 20 à 60% en mole, en particulier de préférence (A1) représente 40 à 75% en mole et (A2) représente 25 à 60% en mole.

7. Masse de moulage en polyamide selon l'une quelconque des revendications précédentes, **caractérisée en ce que** le copolyamide 10T/6T du composant (A) est, de manière essentiellement exclusive, de préférence de manière complètement exclusive, à base d'acide téréphtalique comme acide dicarboxylique.

8. Masse de moulage en polyamide selon l'une quelconque des revendications précédentes 1-6, **caractérisée en ce que** les autres acides dicarboxyliques aromatiques, aliphatiques ou cycloaliphatiques comprenant 6 à 36 atomes de carbone, qui remplacent partiellement l'acide téréphtalique, sont choisis dans le groupe suivant : acide naphtalènedicarboxylique (NDA), acide isophtalique (IPS), acide adipique, acide subérique, acide azélaïque, acide sébacique, acide undécanedioïque, acide dodécanedioïque, acide brassylique, acide tétradécanedioïque, acide pentadécanedioïque, acide hexadécanedioïque, acide octadécanedioïque, acide dimérique, acide cis-cyclohexane-1,4-dicarboxylique et/ou trans-cyclohexane-1,4-dicarboxylique, acide cis-cyclohexane-1,3-dicarboxylique et/ou trans-cyclohexane-1,3-dicarboxylique (CHDA), ainsi que leurs combinaisons.

9. Masse de moulage en polyamide selon la revendication 8, **caractérisée en ce que** les autres acides dicarboxyliques aromatiques, aliphatiques ou cycloaliphatiques comprenant 6 à 36 atomes de carbone, qui remplacent partiellement l'acide téréphtalique, sont choisis, pour le réglage d'une température de transition vitreuse plus élevée, dans le groupe suivant : acide naphtalènedicarboxylique (NDA), acide isophtalique (IPS), trans-cyclohexane-1,3-dicarboxylique (CHDA), ainsi que leurs combinaisons, où l'acide naphtalènedicarboxylique (NDA) est préféré, et sont choisis, pour le réglage d'une température de transition vitreuse plus basse, dans le groupe suivant : acide dodécanedioïque, acide brassylique, acide tétradécanedioïque, acide pentadécanedioïque, acide hexadécanedioïque, acide octadécanedioïque, acide dimérique ou leurs combinaisons, où l'acide dodécanedioïque est préféré.

10. Masse de moulage en polyamide selon l'une quelconque des revendications précédentes, **caractérisée en ce que** le copolyamide 10T/6T du composant (A) est essentiellement exclusivement, de préférence complètement exclusivement à base de 1,10-décanediamine pour (A1) et de 1,6-hexanediamine pour (A2) comme diamine.

11. Masse de moulage en polyamide selon l'une quelconque des revendications précédentes 1-9, **caractérisée en ce que** les autres diamines comprenant 4 à 36 atomes de carbone, qui remplacent, dans le composant (A), indépendamment l'un de l'autre, dans (A1) et/ou (A2) jusqu'à 30% en mole de la 1,10-décanediamine ou, selon le cas, de la 1,6-hexanediamine, par rapport à la quantité totale des diamines, sont choisies dans le groupe suivant : diamines linéaires ou ramifiées, aliphatiques telles que la 1,4-butanediamine, la 1,5-pentanediamine, la 2-méthyl-1,5-pentanediamine (MPMD), la 1,8-octanediamine (OMDA), la 1,9-nonanediamine (NMDA), la 2-méthyl-1,8-octanediamine (MODA), la 2,2,4-triméthylhexaméthylènediamine (TMHMD), la 2,4,4-triméthylhexaméthylènediamine (TMHMD), la 5-méthyl-1,9-nonanediamine, la 1,11-tridécanediamine, la 2-butyl-2-éthyl-1,5-pentanediamine, la 1,12-dodécanediamine, la 1,13-tridécanediamine, la 1,14-tétradécanediamine, la 1,16-hexadécanediamine, la 1,18-octadécanediamine, les diamines cycloaliphatiques telles que la cyclohexanediamine, le 1,3-bis(aminométhyl)cyclohexane (BAC), l'isophoronediamine, la norbornanediméthylamine, le 4,4'-diaminodicyclohexylméthane (PACM), le 2,2-(4,4'-diaminodicyclohexyl)propane (PACP) et le 3,3'-diméthyl-4,4'-diaminodicyclohexylméthane (MACM), les diamines araliphatiques telles que la m-xylylènediamine (MXDA) ainsi que leurs combinaisons.

12. Masse de moulage en polyamide selon la revendication 11, **caractérisée en ce que** les autres diamines comprenant 4 à 36 atomes de carbone, qui remplacent dans le composant (A), indépendamment l'un de l'autre, dans (A1) et/ou (A2) jusqu'à 30% en mole de la 1,10-décanediamine ou, selon le cas, de la 1,6-hexanediamine, par rapport à la quantité totale des diamines, sont choisies, pour le réglage d'une température de transition vitreuse plus élevée, dans le groupe suivant : la 2-méthyl-1,5-pentanediamine (MPMD), la 2-méthyl-1,8-octanediamine (MODA), la 2,2,4-triméthylhexaméthylènediamine (TMHMD), le 1,3-bis(aminométhyl)cyclohexane (BAC), le 4,4'-diaminodicyclohexylméthane (PACM), le 3,3'-diméthyl-4,4'-diaminodicyclohexylméthane (MACM), ou leurs combinaisons, où le 1,3-bis(aminométhyl)cyclohexane (BAC) et/ou le 4,4'-diaminodicyclohexylméthane (PACM) sont préférés, et sont choisies, pour le réglage d'une température de transition vitreuse plus basse, dans le groupe suivant : la 1,12-dodécanediamine, la 1,13-tridécanediamine, la 1,14-tétradécanediamine, la 1,16-hexadécanediamine, la 1,18-octadécanediamine, ou leurs combinaisons, où la 1,12-dodécanediamine est préférée.

13. Masse de moulage en polyamide selon l'une quelconque des revendications précédentes, **caractérisée en ce que** le composant (A) est constitué de manière essentiellement exclusive, de préférence de manière complètement exclusive, par les constituants (A1) et (A2).

14. Masse de moulage en polyamide selon l'une quelconque des revendications précédentes 1-12, **caractérisée en ce que** les lactames ou les aminoacides sont choisis dans le groupe suivant : le caprolactame (CL), l'acide α,ω-aminocaproïque, l'acide α,ω-aminononanoïque, l'acide α,ω-amino-undécanoïque (AUA), le laurinelactame (LL), l'acide ω-aminododécanoïque (ADA), ainsi que leurs combinaisons.

15. Masse de moulage en polyamide selon l'une quelconque des revendications précédentes, **caractérisée en ce qu'**il s'agit, pour le composant (B), au moins partiellement, de fibres de verre et/ou de carbone, où il peut s'agir de préférence de fibres courtes, telles que des débris de verre d'une longueur de 2-50 mm ou de fibres continues et où les fibres présentent en outre de préférence une section transversale non circulaire et présentent un rapport des dimensions de l'axe transversal principal à l'axe transversal secondaire de plus de 2, de préférence dans la plage de 2 à 8, en particulier de 2 à 5.

16. Masse de moulage en polyamide selon la revendication 15, **caractérisée en ce qu'**il s'agit, pour le composant (B) de fibres courtes et/ou de fibres continues sous forme de fibres de verre, où celles-ci présentent de préférence un diamètre de 10 à 20 µm, en particulier de préférence de 12 à 18 µm et où la section des fibres de verre peut être ronde, ovale ou polygonale.

17. Masse de moulage en polyamide selon la revendication 16, **caractérisée en ce qu'**il s'agit de fibres courtes et/ou de fibres continues présentant un diamètre de 10 à 14 µm, en particulier de celles présentant un diamètre de 10 à 12 µm.

18. Masse de moulage en polyamide selon l'une quelconque des revendications précédentes, **caractérisée en ce qu'**il s'agit pour le composant (C) d'additifs et/ou d'autres polymères choisis dans le groupe suivant : agents de modification de la résilience, promoteurs d'adhérence ou de compatibilité, accélérateurs ou retardateurs de cristallisation, adjuvants d'écoulement, lubrifiants, agents de démoulage, pigments, colorants et substances de marquage, plastifiants, stabilisateurs, adjuvants de transformation, additifs retardateurs de flamme, de préférence additifs retardateurs de flamme exempts d'halogène, antistatiques, nanoparticules en forme de plaquettes, additifs de conductibilité, tels que la suie, la poudre de graphite ou les nanofibrilles de carbone, résidus de procédés de polymérisation tels que les catalyseurs, les sels et leurs dérivés ainsi qu'agents de régulation, tels que les monoacides, les monoamines.

19. Masse de moulage en polyamide selon l'une quelconque des revendications précédentes, **caractérisée en ce que** la somme des monomères qui remplacent l'acide téréphtalique, la 1,6-hexanediamine et la 1,10-décanediamine ne dépasse pas une concentration de 20% en mole, de préférence de 10% en mole, par rapport à la quantité totale des monomères utilisés dans le composant A.

20. Mélange à base de polyamide contenant la masse de moulage en polyamide selon l'une quelconque des revendications précédentes.

21. Mélange à base de polyamide contenant une masse de moulage en polyamide selon l'une quelconque des revendications précédentes et un polyphénylénéther, en particulier sous forme d'homopolymères, de copolymère, de copolymères greffés, de copolymère à blocs ou d'ionomères, en particulier de préférence le poly(2,6-diéthyl-1,4-phénylène) éther, le poly(2-méthyl-6-éthyl-1,4-phénylène) éther, le poly(2-méthyl-6-propyl-1,4-phénylène)éther, le poly(2,6-dipropyl-1,4-phénylène)éther, le poly(2-éthyl-6-propyl-1,4-phénylène)éther ou les copolymères, tels que ceux qui contiennent du 2,3,6-triméthylphénol, ou les mélanges de ceux-ci, où en particulier de préférence 10-45% en poids de polyphénylénéther sont contenus dans le mélange, ainsi que le cas échéant jusqu'à 30% en poids, de préférence jusqu'à 15% en poids d'agent de modification de la résilience.

22. Granulat, en particulier granulat à bâtonnets, produit semi-fini ou corps façonné renforcé par des fibres longues, en masse de moulage en polyamide selon l'une quelconque des revendications précédentes 1-19 ou en mélange à base de polyamide selon l'une quelconque des revendications 21 et 20, en particulier de préférence pour une utilisation dans un environnement humide et/ou mouillé.

23. Poudre en masse de moulage en polyamide selon l'une quelconque des revendications précédentes 1-19 ou en mélange à base de polyamide selon l'une quelconque des revendications 21 et 20, en particulier de préférence présentant une grosseur moyenne des particules de 30-200 µm.

24. Poudre selon la revendication 23, **caractérisée en ce qu'**elle présente une viscosité en solution à 0,5% en poids dans du m-crésol à 20°C dans la plage de 1,3-2,0, où la masse de moulage en polyamide est de préférence réglée, en particulier de préférence avec un rapport des groupes terminaux carboxyle à amino plus grand ou égal à 1:2 ou, selon le cas à 2:1, de préférence plus grand ou égal à 1:3 ou, selon le cas à 3:1.

25. Poudre selon l'une quelconque des revendications 23 ou 24, **caractérisée en ce qu'**il s'agit d'un mélange de PA10T/6T réglé de manière difonctionnelle en opposition de particules de poudre réglées séparément par amine et carboxyle.

26. Poudre selon l'une quelconque des revendications 23-25, **caractérisée en ce que** la poudre contient, outre le copolyamide 10T/6T des particules d'une autre charge, en particulier de préférence sous forme de billes pleines ou creuses de verre, de préférence présentant un diamètre moyen de 20-80 µm.

27. Utilisation d'une poudre selon l'une quelconque des revendications 23-26 dans un procédé de frittage sélectif au laser.

28. Corps façonné préparé avec utilisation d'une masse de moulage en polyamide selon l'une quelconque des revendications 1-19, avec utilisation d'un mélange à base de polyamide selon l'une quelconque des revendications 20-21, avec utilisation d'un granulat selon la revendication 22 ou avec utilisation d'une poudre selon l'une quelconque des revendications 23-26, préparé de préférence dans ce dernier cas dans un procédé de frittage sélectif au laser.

29. Procédé pour la préparation d'une masse de moulage en polyamide selon l'une quelconque des revendications précédentes 1-19, **caractérisé en ce qu'**on ajoute, lors de la préparation du composant (A) au moins un catalyseur de polycondensation aux mélanges de monomères en une proportion de 0,005 à 1,5% en poids où il s'agit de préférence de composés phosphorés tels que l'acide phosphorique, l'acide phosphoreux, l'acide hypophosphoreux, l'acide phénylphosphonique, l'acide phénylphosphinique et/ou leurs sels avec des cations monovalents à trivalents, tels que Na, K, Mg, Ga, Zn ou Al et/ou leurs esters tels que le phosphate de triphényle, le phosphite de triphényle ou le phosphite de tris(nonylphényle) ou leurs mélanges.

30. Procédé selon la revendication 29, **caractérisé en ce qu'**il s'agit, pour le catalyseur de polycondensation d'acide hypophosphoreux et d'hydrogénohypophosphite de sodium monohydraté en une quantité de 100 à 500 ppm de phosphore par rapport au copolyamide 10T/6T (A) partiellement aromatique.

31. Procédé selon l'une quelconque des revendications 29 ou 30, **caractérisé en ce qu'**on ajoute à la charge de monomères, pour compenser la perte de diamine, un excès de diamine de 1 à 8% en poids par rapport à la quantité totale des diamines.

32. Procédé selon l'une quelconque des revendications 29-31, **caractérisé en ce que** pour le réglage de la masse molaire, de la viscosité relative ou, selon le cas, de l'aptitude à l'écoulement ou de l'indice de fluidité en volume (MVR), on ajoute à la charge et/ou au précondensat des agents de régulation, où il peut s'agir de monoacides ou de monoamines, de préférence choisis dans le groupe suivant : acides monocarboxyliques ou monoamines aliphatiques, cycloaliphatiques ou aromatiques, tels que l'acide acétique, l'acide propionique, l'acide butyrique, l'acide valérianique, l'acide caproïque, l'acide laurique, l'acide stéarique, l'acide 2-éthylhexanoïque, l'acide cyclohexanoïque, l'acide benzoïque, la butylamine, la pentylamine, l'hexylamine, la 2-éthylhexylamine, la n-octylamine, la n-dodécylamine, la n-tétradécylamine, la n-hexadécylamine, la stéarylamine, la cyclohexylamine, la 3-(cyclohexylamino)-propylamine, la méthylcyclohexylamine, la diméthylcyclohexylamine, la benzylamine, la 2-phényléthylamine, ou, selon le cas, leurs combinaisons ou des composés monofonctionnels qui peuvent réagir avec un groupe amino ou acide, tels que les anhydrides, les isocyanates, les halogénures d'acide ou les esters ou, selon le cas, leurs combinaisons, la quantité utilisée des agents de régulation étant de préférence située entre 10 et 200 mmoles/kg - agent de régulation/polymère.
